(19) Europäisches Patentamt
European Patent Office
Office européen des brevets

(11) **EP 4 121 779 B1**

(12) **EUROPÄISCHE PATENTSCHRIFT**

(45) Veröffentlichungstag und Bekanntmachung des Hinweises auf die Patenterteilung:
**20.03.2024   Patentblatt 2024/12**

(21) Anmeldenummer: **22719214.3**

(22) Anmeldetag: **23.03.2022**

(51) Internationale Patentklassifikation (IPC):
**G01P 3/68** *(2006.01)*     **G01P 13/04** *(2006.01)*
**A63B 43/00** *(2006.01)*     A63B 39/06 *(2006.01)*
A63B 39/00 *(2006.01)*     A63B 102/16 *(2015.01)*
A63B 24/00 *(2006.01)*

(52) Gemeinsame Patentklassifikation (CPC):
**G01P 3/685; A63B 43/008; G01P 13/04;**
A63B 39/06; A63B 2024/0034; A63B 2039/003;
A63B 2102/16; A63B 2220/35

(86) Internationale Anmeldenummer:
**PCT/EP2022/057660**

(87) Internationale Veröffentlichungsnummer:
**WO 2022/200447 (29.09.2022 Gazette 2022/39)**

(54) **TISCHTENNISBALL MIT MARKIERUNG ZUR ERFASSBARMACHUNG EINER BALLROTATION**

TABLE TENNIS BALL  WITH MARKING ENABLING TO MEASURE THE BALL SPIN

BALLE DE TENNIS DE TABLE AVEC MARQUAGE PERMETTANT LA MESURE DE LA ROTATION DE LA BALLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.03.2021   DE 102021202843**

(43) Veröffentlichungstag der Anmeldung:
**25.01.2023   Patentblatt 2023/04**

(73) Patentinhaber: **SPINSIGHT ESN Digital GmbH**
**97461 Hofheim (DE)**

(72) Erfinder:
• **OTTENBERG, Matthias**
**49074 Osnabrück (DE)**
• **TIEFENBACHER, Konrad**
**66111 Saarbrücken (DE)**
• **KRAUS, Thomas**
**96450 Coburg (DE)**

(74) Vertreter: **FDST Patentanwälte**
**Nordostpark 16**
**90411 Nürnberg (DE)**

(56) Entgegenhaltungen:
WO-A1-2009/039367     US-A1- 2007 084 095
US-A1- 2018 353 828     US-A1- 2021 008 417

**Beschreibung**

Die Erfindung bezieht sich auf einen Tischtennisball (nachfolgend auch kurz "Ball") nach dem Oberbegriff des Anspruchs 1, mit einer kugelförmigen Balloberfläche und einer auf der Balloberfläche aufgebrachten Markierung zur messtechnischen Erfassbarmachung einer Ballrotation, wobei die Markierung eine Anzahl von Markierungspunkten umfasst. Ein solcher Tischtennisball ist beispielsweise aus WO 2020 096120 A1 bekannt.

Im Tischtennissport ist neben der Ballgeschwindigkeit auch die Ballrotation (auch als "Spin" bezeichnet) von entscheidender Bedeutung, da die Ballrotation die Flugbahn des Balls und das Abprall-Verhalten des Balls an der Tischtennisplatte und dem Schläger des gegnerischen Spielers entscheidend beeinflusst. Insbesondere im Tischtennis-Leistungssport besteht daher ein starkes Bedürfnis an einer möglichst präzisen Bestimmung des Spins im Flug, um z.B. Trainern eine objektive Kontrolle und zielgerichtete Verbesserung der Schlagtechnik von Tischtennisspielern zu ermöglichen. Zudem besteht ein Bedürfnis, bei Turnierspielen im Rahmen der Spielmoderation oder Sportreportage die Ballbewegung von Tischtennisbällen - möglichst in Echtzeit - zu messen und zu analysieren.

Um den Spin von Tischtennisbällen im Flug sichtbar zu machen, ist grundsätzlich die Aufbringung von Markierungen auf der Balloberfläche bekannt. So ist beispielsweise in dem deutschen Wikipedia-Eintrag zum Thema "Tischtennisball" (https:/lde.wikipedia.org/wikilTischtennisball; Version vom 17.04.2020, 20:51 Uhr) ein Tischtennis-Trainingsball abgebildet, auf dessen Balloberfläche als Markierung zur Spin-Erkennung ein farbiges Muster aus großflächigen Farbflächen aufgedruckt ist.

Bei dem aus WO 2020 096120 A1 bekannten Tischtennisball umfasst die zur Spin-Erkennung aufgebrachte Markierung andererseits sechs Markierungspunkte, die gleichmäßig über die Balloberfläche verteilt sind. Jeder Markierungspunkt hat einen Durchmesser zwischen 5 mm (Millimeter) und 13 mm.

Ähnlich wie im Tischtennissport besteht auch im Golfsport ein Bedürfnis zur Messung der Ballrotation im Flug. Auch hier werden auf die Balloberfläche aufgebrachte Markierungen, insbesondere in Form von Punktmustern, genutzt, um die Ballrotation beim Abschlag messtechnisch erfassbar zu machen. Entsprechende Golfbälle sind beispielsweise aus CN 107 543 530 A, KR 102 101 512 B1, US 2018 0353828 A1 und US 7 062 082 B2 bekannt. Die hier offenbarten Markierungen weisen jeweils eine oder mehrere Gruppen mit mehreren eng benachbarten Markierungspunkten auf.

Aus US 2007 0084095 A1 ist ein Tischtennisball mit einer Markierung zur visuellen Erfassbarmachung einer Ballrotation bekannt, bei dem die Markierung aus dreieckigen Flächen oder Linien, Kreisen oder Punkten bestehen kann. Die Struktur der Markierung basiert hierbei auf symmetrisch auf der Balloberfläche verteilten geodätischen Linien.

Alternativ werden gemäß CN 106 643 662 A zur Spin-Erkennung bei Golfbällen Markierungen eingesetzt, die ein- oder zweidimensionale Strukturen wie z.B. Striche aufweisen. Wiederum alternativ wird in JP 2016 218014 A vorgeschlagen, eine auf einem Golfball aufgebrachte Herstellerkennzeichnung als Markierung zur Erfassbarmachung des Spins zu nutzen. Ein Golfball mit einer aus gekrümmten Liniensegmenten, Spirallinien oder Kreisen gebildeten Markierung ist aus WO 2009 039367 A1 bekannt.

Ein Ball mit einer kugelförmigen Balloberfläche und einer darauf aufgebrachten Markierung zur messtechnischen Erfassbarmachung einer Ballrotation, die eine Anzahl von Markierungspunkten umfasst, ist außerdem aus US 2021 0008417 A1 bekannt. Die Markierungspunkte sind dort derart auf der Balloberfläche verteilt, dass jeder Großkreis, der sich um die Balloberfläche herum erstreckt, innerhalb eines vorgegebenen Abstands zu einem der Markierungspunkte liegt, wobei der Abstand kleiner als der Radius des Balls ist.

Während allerdings automatische Verfahren zur Spin-Messung von Golfbällen bereits erfolgreich eingesetzt werden, haben sich entsprechende Messverfahren im Tischtennissport noch nicht etabliert. Dies liegt vor allem daran, dass herkömmliche Messverfahren zu langsam sind, um im Tischtennissport sinnvoll einsetzbar zu sein. Denn im Vergleich zu Golf ist Tischtennis ein sehr schneller Sport, der von einer hohen Frequenz von Schlägen geprägt ist; während eines Ballwechsels überquert der Ball das Netz typischerweise mehr als ein Mal pro Sekunde. Erschwerend kommt hinzu, dass - anders als im Golfsport - die Position und Orientierung des Balls zu Beginn der Messung nicht bekannt ist. Während im Golfsport die Spin-Messung typischerweise beim Abschlag erfolgt, vor dem der Ball ruht (so dass die Position und Orientierung des Balls genau definiert sind), wird der Spin eines Tischtennisballs im Flug (meist bei der Überquerung des Netzes) gemessen. Da aber die Flugbahn eines Tischtennisballs a priori nur mit großer Ungenauigkeit vorhersagbar ist, muss eine Messvorrichtung zur Spin-Berechnung von Tischtennisbällen den Ball erst suchen, bevor sie den Spin messen kann, was ein erhebliches Maß an Messzeit kostet. Zudem ist auch die Orientierung des Tischtennisballs zum Zeitpunkt seiner Erfassung durch die Messapparatur priori nicht bekannt und muss erst ermittelt werden. Aus diesen Gründen ist eine Spin-Messung von Tischtennisbällen im Flug bisher nur unter günstigen Umständen und, gemessen an dem Spielverlauf, nur mit hoher Zeitverzögerung möglich. Eine verlässliche Spin-Ermittlung in jeder Spielsituation (insbesondere näherungsweise in Echtzeit, also näherungsweise während der Zeit zwischen zwei Schlägen) ist derzeit noch nicht verfügbar.

Der Erfindung liegt die Aufgabe zugrunde, eine besonders schnelle und fehlersichere automatische Ermittlung der Ballrotation (Spin) im Flug eines Tischtennisballs zu ermöglichen.

Diese Aufgabe wird erfindungsgemäß gelöst durch die Merkmale des Anspruchs 1. Danach wird ein Tischtennisball mit einer kugelförmigen Balloberfläche und einer auf der Balloberfläche aufgebrachten Markierung zur messtechnischen Erfassbarmachung einer Ballrotation (Spin) angegeben. Wie an sich aus WO 2020 096120 A1 bekannt ist, umfasst die Markierung eine Anzahl von Markierungspunkten. Die Anzahl der Markierungspunkte wird nachfolgend mit der Variable N beschrieben. Der Radius des Tischtennisballs wird nachfolgend mit der Variable R beschrieben.

Vorzugsweise besteht die für die Erfassbarmachung des Spins relevante Markierung ausschließlich aus den Markierungspunkten. In diesem Fall handelt es sich bei der Markierung mit anderen Worten um ein reines Punktmuster, das außer den genannten Markierungspunkten keine weiteren Strukturen aufweist. Zwar kann der Tischtennisball auch in dieser Variante der Erfindung weitere Strukturen oder Muster auf seiner Balloberfläche aufweisen. Solche weiteren Strukturen gehören dann aber nicht zu der für die Spinnermittlung relevanten Markierung und werden bei der Spinnermittlung auch nicht ausgewertet.

Erfindungsgemäß ist die Verteilung der Markierungspunkte auf der Balloberfläche durch eine Anzahl von Kriterien charakterisiert:

Gemäß einem ersten Kriterium beträgt die Standardabweichung der Längen der Orthodromen zwischen jedem der Markierungspunkte und seinen drei nächsten Nachbarpunkten mindestens 12 % des Mittelwerts dieser Längen beträgt. Bei der Berechnung der Standardabweichung werden somit die Punktabstände aller Markierungspunkte zu ihren jeweiligen drei nächsten Nachbarpunkten berücksichtigt.

Gemäß einem zweiten Kriterium beträgt die minimale Länge der Orthodromen zwischen jedem der Markierungspunkte und seinen drei nächsten Nachbarpunkten mindestens 40% des Mittelwerts der Längen dieser Orthodromen. In anderen Worten weist gemäß dem zweiten Kriterium keine der Orthodromen zwischen einem der Markierungspunkte und einem seiner drei nächsten Nachbarpunkte eine Länge auf, die 40% des Mittelwerts der Längen dieser Orthodromen unterschreitet.

Zusätzlich oder alternativ zu dem zweiten Kriterium ist die Punkteverteilung dadurch charakterisiert, dass die minimale Länge der Orthodromen zwischen jedem der Markierungspunkte und seinen drei nächsten Nachbarpunkten mindestens 120% des Quotienten des Ballradius zu der Quadratwurzel der Punktanzahl beträgt. In anderen Worten weist gemäß dem dritten Kriterium keine der Orthodromen zwischen einem der Markierungspunkte und einem seiner drei nächsten Nachbarpunkte eine Länge auf, die 120% des Quotienten des Ballradius zu der Quadratwurzel der Punktanzahl unterschreitet.

Auch bei dem zweiten und dritten Kriterium werden jeweils die Punktabstände aller Markierungspunkte zu ihren jeweiligen drei nächsten Nachbarpunkten berücksichtigt.

Die Erfindung basiert auf der Erkenntnis, dass die Realisierbarkeit einer fehlersicheren sowie numerisch hinreichend einfachen und damit schnellen Ermittlung des Spins eines Tischtennisballes wesentlich von der Art der auf den Tischtennisball aufgebrachten Markierung abhängt.

In einem ersten Schritt geht die Erfindung dabei von der Überlegung aus, dass Markierungen, die ein- oder zweidimensionale Strukturen aufweisen, für die automatische Spin-Ermittlung ungünstig sind, da solche Strukturen nur durch numerisch aufwändige und somit vergleichsweise zeitintensive Bilderkennungsmethoden (insbesondere durch Segmentierung) erfasst werden können. Im Gegensatz hierzu können punktförmige Strukturen erkanntermaßen mit sehr geringem numerischen Aufwand erfasst werden. Die Erfindung konzentriert sich daher auf die Entwicklung einer Markierung, die aus einer Anzahl von Markierungspunkten besteht oder solche Markierungspunkte zumindest umfasst.

Die in WO 2020 096120 A1 vorgeschlagene gleichmäßige Verteilung von Markierungspunkten wird allerdings als nachteilig erkannt, da sie keine eindeutige Erkennung der Ballorientierung aus einer fotografischen Abbildung des Tischtennisballs zulässt. Vielmehr gibt es bei dem hier vorgeschlagenen Ball sechs verschiedene Orientierungen, die die Markierung in sich selbst abbilden und die daher in einer fotografischen Aufnahme des Balls nicht unterscheidbar sind. Diese Redundanz der Markierung kann erkanntermaßen dazu führen, dass bei einer vergleichenden Auswertung einer zeitlichen Sequenz von Bildern des Balls die in den verschiedenen Bildern erkennbaren Markierungspunkte einander falsch zugeordnet werden, was wiederum in Fehlern bei der Spin-Berechnung resultieren kann.

Aber auch eine Gruppierung von Markierungspunkten, wie sie in CN 107 543 530 A, KR 102 101 512 B1, US 2018 0353828 A1 und US 7 062 082 B2 vorgeschlagen wird, hat sich für die Spin-Ermittlung im Tischtennissport als nicht zielführend erwiesen. Dies liegt vor allem daran, dass die Orientierung des Balls zu Beginn der messtechnischen Erfassung im Tischtennis - anders als beim Abschlag im Golfsport - nicht bekannt ist. Da somit Tischtennisbälle in beliebigen Orientierungen in den Erfassungsbereich einer Messvorrichtung geraten können, befinden sich zum Zeitpunkt der Erfassung mit vergleichsweise hoher Wahrscheinlichkeit viele der in Gruppen konzentrierten Messpunkte nicht an der der Messvorrichtung zugewandten Ballseite und werden daher nur schlecht oder gar nicht abgebildet. Unter diesen Umständen würde eine herkömmliche, auf einer Auswertung einer zeitlichen Sequenz von Bildern des Balls beruhende Spin-Ermittlung regelmäßig scheitern. Zwar ließe sich dieses Problem erkanntermaßen durch eine dichtere Anordnung von Punktgruppen auf der Balloberfläche lösen. Dies würde aber wiederum - infolge der dann höheren Anzahl von Markierungspunkten und der dichteren Packung derselben - mit einem erhöhten numerischen Aufwand für die Identifizierung der Markierungspunkte und einer geringeren Präzision bei der Spin-Ermittlung erkauft.

In Anbetracht der Nachteile des Standes der Technik schlägt die Erfindung einen Mittelweg ein. Sie beruht auf der Idee, die Markierungspunkte zwar global (d.h. bezogen auf die Gesamtheit der Markierungspunkte) möglichst homogen, lokal (d.h. bezogen auf die einzelnen Markierungspunkte und ihre nächsten Nachbarpunkte) aber möglichst inhomogen und unregelmäßig (pseudo-zufällig) zu verteilen.

Durch die globale Homogenität der Punktverteilung wird erreicht, dass in jeder möglichen Orientierung des Balls eine besondere große Untergruppe von Markierungspunkten gut zu erkennen sind, auch und gerade dann, wenn die Markierung insgesamt nur aus einer vergleichsweise geringen Anzahl von Markierungspunkten gebildet ist. Dies gewährleistet eine numerisch unaufwändige Identifizierung der detektierten Markierungspunkte. Durch die lokale Inhomogenität der Punktverteilung wird dabei aber die Identifizierung der einzelnen Markierungspunkte wesentlich vereinfacht, da die einzelnen Markierungspunkte anhand ihrer Anordnung in Relation zu den Nachbarpunkten einfach, eindeutig und fehlersicher erkannt werden können.

Besonders einfach und eindeutig lassen sich die vorstehend beschriebenen Eigenschaften, also einerseits die globale Homogenität und andererseits die lokale Inhomogenität der Punktverteilung der erfindungsgemäßen Markierung anhand der Längen der Orthodromen zwischen einem jeden Markierungspunkt und seinen drei nächsten Nachbarpunkten beschreiben. Der Begriff "Orthodrome" bezeichnet dabei die kürzeste Verbindung zwischen den jeweils betrachteten Markierungspunkten auf der kugelförmigen Balloberfläche.

Als "nächster Nachbarpunkt" eines betrachteten Markierungspunktes ("Zentralpunkt") wird stets derjenige Markierungspunkt bezeichnet, der mit dem Zentralpunkt über die Orthodrome mit der kürzesten Länge verbunden ist. Als "zweitnächster Nachbarpunkt" und "drittnächster Nachbarpunkt" des Zentralpunkts werden entsprechend stets diejenigen Markierungspunkte bezeichnet, die mit dem Zentralpunkt über die Orthodrome mit der zweitkürzesten Länge bzw. drittkürzesten Länge verbunden sind. Im Sinne dieser Definition hat jeder der Markierungspunkte einen nächsten Nachbarpunkt, einen zweitnächsten Nachbarpunkt und einen drittnächsten Nachbarpunkt und kann entsprechend dieser Definition den Zentralpunkt darstellen. Bevorzugt ist die Markierung dabei so gewählt, dass für jeden Zentralpunkt die nächsten drei Nachbarpunkte paarweise unterschiedlich weit entfernt sind, so dass diese Nachbarpunkte dem jeweiligen Zentralpunkt eindeutig als nächster, zweitnächster und drittnächster Nachbarpunkt zugeordnet werden können. Im Rahmen der Erfindung können aber auch einer oder mehrere Markierungspunkte von zweien ihrer drei nächsten Nachbarpunkte gleich weit entfernt sein. In Einzelfällen können mit anderen Worten der nächste Nachbarpunkt und der zweitnächste Nachbarpunkt und/oder der zweitnächste Nachbarpunkt und der drittnächste Nachbarpunkt gleich weit von dem Zentralpunkt entfernt sein.

Die Gruppe von Markierungspunkten, die aus dem jeweils betrachten Markierungspunkt (Zentralpunkt) und seinen drei nächsten Nachbarpunkten gebildet wird, wird im Folgenden auch als "Vierpunkt-Netz" bezeichnet. Die Markierung weist eine der Anzahl der Markierungspunkte entsprechende Anzahl von solchen Vierpunkt-Netzen auf.

Zur sprachlichen Vereinfachung wird vorstehend und im Folgenden die Länge einer Orthodrome jeweils als "Punktabstand" bezeichnet. Der jeweilige Punktabstand wird dabei - entsprechend dem Verlauf der zugehörigen Orthodrome - entlang der Balloberfläche gemessen.

Die Längen von Orthodromen, die den jeweiligen Zentralpunkt eines betrachteten Vierpunkt-Netzes mit einem seiner drei nächsten Nachbarpunkte verbinden, werden nachfolgend als "Zentral-Punktabstände" bezeichnet und mit dem Formelzeichen $Z_{i,j}$ beschrieben. Die Laufvariable i (mit i = 1, 2, ..., N) bezeichnet hierbei denjenigen Markierungspunkt, der in dem jeweiligen Zusammenhang als Zentralpunkt betrachtet wird. Die Laufvariable j (mit j = 1, 2, 3) bezeichnet den nächsten, zweitnächsten bzw. drittnächsten Nachbarpunkt zu dem i-ten Zentralpunkt. Das Formelzeichnung $Z_{5,2}$ bezeichnet in diesem Sinne beispielsweise den Zentral-Punktabstand zwischen dem als Zentralpunkt betrachteten fünften Markierungspunkt und seinem zweitnächsten Nachbarpunkt.

Die Betrachtung der vorstehend eingeführten Vierpunkt-Netze hat sich als besonders vorteilhaft erwiesen, da die drei nächsten Nachbarpunkte erkanntermaßen bei angenäherter Gleichverteilung der Markierungspunkte besonders häufig eine mehr oder weniger ausgeprägte und abgeschlossene erste Schale um den jeweiligen Zentralpunkt bilden. Die drei nächsten Nachbarpunkte zeichnen sich dabei dadurch aus, dass sie untereinander ähnliche Punktabstände zu dem Zentralpunkt haben, die - je nach Punktanzahl und Homogenität des Musters - mehr oder weniger deutlich verschieden von den Punktabständen der weiter entfernten Nachbarpunkte ist.

Das vorstehend beschriebene erste Kriterium der Punktverteilung, wonach die Standardabweichung (nachfolgend σ) der Längen der Orthodromen zwischen jedem der Markierungspunkte und seinen drei nächsten Nachbarpunkten mindestens 12 % des Mittelwerts (nachfolgend μ) dieser Längen beträgt, lässt sich somit schreiben als:

$$\frac{\sigma}{\mu} \geq 12\% \qquad\qquad\qquad \text{Glg. 1}$$

mit

$$\sigma = \sqrt{\frac{\sum_{i=1;j=1}^{N;3}(Z_{i,j}-\mu)^2}{3\cdot N}}$$

Glg. 2

und

$$\mu = \frac{\sum_{i=1;j=1}^{N;3} Z_{i,j}}{3\cdot N}$$

Glg. 3

Bevorzugt beträgt die vorstehend angegebene Standardabweichung $\sigma$ der Zentral-Punktabstände $Z_{i,j}$ mindestens 15% des zugehörigen Mittelwerts $\mu$. Wie aus den Glg. 2 und 3 erkennbar ist, wird bei der Berechnung der Standardabweichung $\sigma$ und des Mittelwerts $\mu$ jeweils über die drei nächsten (Zentral-)Punktabstände $Z_{i,j}$ aller Markierungspunkte Pi summiert, also über $Z_{1,1}$, $Z_{1,2}$, $Z_{1,3}$, $Z_{2,1}$, $Z_{2,2}$, $Z_{2,3}$, ..., $Z_{N,1}$, $Z_{N,2}$, $Z_{N,3}$.

Ein geringer Wert der Standardabweichung $\sigma$ zeigt an, dass jedenfalls für die meisten Markierungspunkte Pi die drei nächsten Nachbarpunkte in einem vergleichsweise dünnen Kreisring um den jeweils als Zentralpunkt betrachteten Markierungspunkt Pi liegen oder dass - anders ausgedrückt - jedenfalls die meisten Markierungspunkte Pi in sehr ähnlichen Punktabständen zu ihren drei nächsten Nachbarpunkten angeordnet sind. Die Kenngrößen $\sigma$ und $\sigma/\mu$ stellen daher jeweils ein Maß für die Homogenität der Punktverteilung dar. Durch den oben angegebenen Mindestwert der Standardabweichung wird sichergestellt, dass die Punktverteilung innerhalb der Vierpunktnetze nicht zu homogen wird.

Das zweite Kriterium der vorstehend beschriebenen Punktverteilung, wonach die minimale Länge der Orthodromen zwischen jedem der Markierungspunkte und seinen drei nächsten Nachbarpunkten, also der kleinste (Zentral-)Punktabstand $d_{min}$ auf der Balloberfläche, mindestens 30% des Mittelwerts dieser Längen beträgt, lässt sich schreiben als:

$$d_{min}=\min\{Z_{i,j}|i = 1, ..., N; j = 1,2,3\} \geq 40\% \cdot \mu$$

Glg. 4

Bevorzugt beträgt dieser kleinste (d.h. minimale) Punktabstand $d_{min}$ sogar mindestens 50%, insbesondere mindestens 60% des zugehörigen Mittelwerts $\mu$. Wie der Gig. 4 zu entnehmen ist, gilt auch das zweite Kriterium für jeweiligen drei nächsten (Zentral-)Punktabstände $Z_{i,j}$ aller Markierungspunkte Pi, also für $Z_{1,1}$, $Z_{1,2}$, $Z_{1,3}$, $Z_{2,1}$, $Z_{2,2}$, $Z_{2,3}$, ..., $Z_{N,1}$, $Z_{N,2}$, $Z_{N,3}$.

Durch dieses zweite Kriterium der Punktverteilung wird ein zu geringer Abstand der Markierungspunkte zueinander ausgeschlossen. Somit wird insbesondere eine Cluster-Bildung von Markierungspunkten ausgeschlossen. Das zweite Kriterium garantiert mithin eine angenäherte globale Homogenität der Punktverteilung.

Ein weiteres Maß für die globale Homogenität der Punktverteilung ist der minimale (Zentral-)Punktabstand $d_{min}$ im Verhältnis zum Ballradius R. Bei bestmöglicher Gleichverteilung von N Markierungspunkten auf der Balloberfläche sind die Markierungspunkte Pi im Durchschnitt möglichst weit voneinander entfernt. Punktpaare mit herausragend geringem Punktabstand (d.h. Punktgruppen eng benachbarter Markierungspunkte) sind mit anderen Worten vermieden. Näherungsweise kann angenommen werden, dass im Fall der bestmöglichen Gleichverteilung jeder der Markierungspunkte in einem anderen N-tel der Balloberfläche angeordnet ist, dass also jeder der Markierungspunkte mehr oder weniger zentral in einer zugeordneten Teilfläche der Balloberfläche angeordnet ist, in der sich kein anderer Markierungspunkt befindet, wobei jede dieser Teilflächen jeweils eine Ausdehnung $A_P$ von einem N-tel der Balloberfläche hat.

$$A_P = \frac{4\cdot\pi\cdot R^2}{N}$$

Glg. 5

Wenn man diese Teilflächen nun wiederum näherungsweise als ebene Kreisflächen annimmt, so kann man aus Glg. 5 und der Formel für den Flächeninhalt eines Kreises ($A_P \approx 0{,}25 \cdot \pi \cdot d_G^2$) den Durchmesser dc der Teilflächen abschätzen:

$$d_G \approx \frac{4\cdot R}{\sqrt{N}}$$

Glg. 6

Der Durchmesser dc ist somit ein Maß für den typischen Abstand von gleichverteilten Markierungspunkten zu ihren jeweiligen Nachbarpunkten auf der Balloberfläche. Wie aus Glg. 6 zu ersehen ist, nimmt dieser typische Abstand näherungsweise mit der Quadratwurzel der Punktanzahl N ab. Da die Ausdehnung der Balloberfläche begrenzt ist, kann der Abstand zwischen Markierungspunkten in der Regel nicht erhöht werden, ohne dass an anderer Stelle der Balloberfläche der Punktabstand abnimmt. Das Verhältnis des minimalen Punktabstands $d_{min}$ zu dem Durchmesser dc ist damit ein Maß dafür, wie stark die Punkteverteilung von globaler Homogenität abweicht.

Gemäß dem vorstehend genannten dritten Kriterium beträgt der minimale Punktabstand $d_{min}$ mindestens 30% des nach Glg. 6 berechneten typischen Abstandes dc oder - äquivalent ausgedrückt - mindestens 120% (also das 1,2-fache) des Quotienten des Ballradius R zu der Quadratwurzel der Punktanzahl N:

$$d_{min}=\min\left\{Z_{i,j}\big| i = 1, \dots, N; j = 1,2,3\right\} \geq 30\% \cdot \frac{4\cdot R}{\sqrt{N}} = 120\% \cdot \frac{R}{\sqrt{N}} \qquad \text{Glg. 7}$$

Bevorzugt beträgt der minimale Punktabstand $d_{min}$ mindestens 37,5%, insbesondere mindestens 45% des typischen Abstandes dc. Äquivalent ausgedrückt beträgt der minimale Punktabstand $d_{min}$ bevorzugt mindestens 150% (also das 1,5-fache), insbesondere mindestens 180% (also das 1,8-fache) des Quotienten des Ballradius R zu der Quadratwurzel der Punktanzahl N. Bei einem Muster mit 18 Markierungspunkten (N = 18) beträgt der minimale Punkt-abstand $d_{min}$ somit mindestens 28%, bevorzugt mindestens 35% und insbesondere mindestens 42% des Ballradius R.

Wie vorstehend erwähnt, werden das zweite Kriterium und das dritte Kriterium im Rahmen der Erfindung alternativ zueinander oder in Kombination miteinander, stets aber in Kombination mit dem ersten Kriterium, zur Charakterisierung des erfindungsgemäßen Ballmusters berücksichtigt.

Längen von Orthodromen, die die drei nächsten Nachbarpunkte untereinander verbinden, werden in Abgrenzung von den Zentral-Punktabständen $Z_{i,j}$ als "Peripherie-Punktabstände" $Q_{i,k}$ bezeichnet. Die Laufvariable i bezeichnet hierbei wiederum den als Zentralpunkt betrachteten Markierungspunkt. Die Laufvariable k (mit k = 1, 2, 3) kennzeichnet dagegen

- für k = 1 den Punktabstand zwischen dem nächsten Nachbarpunkt und zweitnächsten Nachbarpunkt,
- für k = 2 den Punktabstand zwischen dem zweitnächsten Nachbarpunkt und drittnächsten Nachbarpunkt, und
- für k =3 den Punktabstand zwischen dem drittnächsten Nachbarpunkt und nächsten Nachbarpunkt

des i-ten Markierungspunkts. Das beispielhaft herausgegriffene Formelzeichen $Q_{5,2}$ bezeichnet in diesem Sinne somit den Peripherie-Punktabstand zwischen dem zweitnächsten Nachbarpunkt und dem drittnächsten Nachbarpunkt des als Zentralpunkt betrachteten fünften Markierungspunkts.

In einer bevorzugten Ausführung der Erfindung sind die Markierungspunkte gemäß einem vierten Kriterium derart auf der Balloberfläche verteilt sind, dass die Spannweite (nachfolgend $\Delta Q_i$) der Peripherie-Punktabstände $Q_{i,k}$ eines jeden Vierpunkt-Netzes, oder mit anderen Worten die Differenz zwischen der längsten Orthodrome und der kürzesten Orthodrome zwischen den drei nächsten Nachbarpunkten eines jeden Markierungspunkts, größer als 30% des vorstehend definierten Mittelwerts $\mu$ der Zentral-Punktabstände $Z_{i,j}$ ist:

$$\frac{\Delta Q_i}{\mu} = \frac{\max\left\{Q_{i,j}\big| i = 1,2,3\right\}-\min\left\{Q_{i,j}\big| i = 1,2,3\right\}}{\mu} > 30\%$$

für jedes i = 1,2,…,N $\qquad\qquad$ Glg. 8

Dieses vierte Eigenschaft der Punktverteilung gemäß Glg. 8 kann sowohl in Kombination mit einem der vorstehend beschriebenen Merkmale der Markierung als auch losgelöst hiervon vorteilhaft bei einem Tischtennisballs nach dem Oberbegriff des Anspruchs 1 zur Charakterisierung einer besonders geeigneten Punktverteilung herangezogen werden und wird insofern auch als eigenständige Erfindung angesehen. Bevorzugt ist die Spannweite $\Delta Q_i$ größer als 35% und insbesondere sogar größer als 40% des Mittelwerts $\mu$.

Die bevorzugte Festlegung einer unteren Grenze für die Spannweite $\Delta Q_i$ beruht auf der Erkenntnis, dass diese Spannweite $\Delta Q_i$ beschreibt, wie stark das durch die drei nächsten Nachbarpunkte eines Vierpunkt-Netzes gebildete Dreieck von einem gleichseitigen Dreieck und somit einer lokal homogenen Punktverteilung abweicht. Somit stellt ein hinreichend großer Wert der Spannweite $\Delta Q_i$ erkanntermaßen ein besonders aussagekräftiges Maß für die gewünschte lokale Inhomogenität der Punktverteilung dar.

In bevorzugten Ausführungen der Erfindung beträgt die Anzahl der Markierungspunkte zwischen 13 und 25, vorzugsweise zwischen 16 und 21, und insbesondere bei 18 oder 19. Dies beruht auf der Erfahrung, dass eine Anzahl von 18 oder 19 auf der Balloberfläche verteilten Markierungspunkten eine hinsichtlich des numerischen Aufwands und der Zuverlässigkeit optimierte Spin-Erkennung zulässt.

Bei Markierungen, die weniger Markierungspunkte aufweisen, treten - mit sinkender Anzahl der Markierungspunkte umso häufiger - Situationen auf, in denen in einem Bild des Balles nicht genügend Markierungspunkte gut zu erkennen sind, um die erkennbaren Markierungspunkte eindeutig identifizieren zu können. Dies kann zu Ungenauigkeiten oder Fehlern bei der Spin-Berechnung führen.

Mit steigender Anzahl der Markierungspunkte nimmt andererseits die Anzahl der Möglichkeiten, mit denen eine messtechnisch erfasste Gruppe von Markierungspunkten verglichen werden muss, um sie zu identifizieren, überproportional zu. Hierdurch verursachen Markierungen, die mehr als 19 Markierungspunkte aufweisen, wiederum einen erhöhten numerischen Aufwand bei der Spin-Ermittlung.

In weniger ausgeprägtem Maß werden die mit der Erfindung bezweckten Vorteile allerdings auch mit Markierungen mit 16, 17, 20 oder 21 Markierungspunkten erzielt; in noch weniger ausgeprägtem Maß mit Markierungen, die 13 bis 15 oder 22 bis 25 Markierungspunkte umfassen.

Vorzugsweise ist der Durchmesser eines jeden Markierungspunkts so gewählt, dass er zwischen 10% und 24%, vorzugsweise zwischen 15% und 20% und insbesondere 17,5% des Ballradius beträgt. In absoluten Angaben beträgt der Durchmesser eines jeden Markierungspunktes vorzugsweise 2,0 mm und 4,8 mm, vorzugsweise zwischen 3,0 und 4,0 mm und insbesondere 3,5 mm. Diese Dimensionierung der Markierungspunkte hat sich als besonders vorteilhaft erwiesen, da die Markierungspunkte einerseits hinreichend groß sind, um auf Bildern des Balls auch unter ungünstigen Umständen (z.B. bei vergleichsweise großer Entfernung des Balls zur Messeinrichtung) sicher detektierbar zu sein. Andererseits sind die so dimensionierten Markierungspunkte aber hinreichend klein, dass sie in brauchbarer Näherung als punktförmige (d.h. dimensionslose) Strukturen behandelt werden können, wodurch eine numerisch einfache Bildauswertung ermöglicht wird. Eine einfache Bildauswertung wird in einer weiteren optionalen Ausführungsform auch dadurch begünstigt, dass alle Markierungspunkte die gleiche Form und Größe haben.

In einer vorteilhaften Ausführungsform zeichnen sich die Markierungspunkte durch eine von der übrigen Balloberfläche verschiedene Infrarot-Absorptions- oder Infrarot-Reemissions-Charakteristik aus, so dass sich die Markierungspunkte in dem infraroten Bereich (IR) des elektromagnetischen Strahlungsspektrums, insbesondere in einem Infrarotbild des Tischtennisballs, von der übrigen Balloberfläche kontrastierend abheben. Insbesondere sind die Markierungspunkte mittels eines infrarotsensitiven Lacks auf der Balloberfläche aufgebracht (wobei dieser infrarotsensitive Lack nur für die Markierungspunkte, nicht für sonstige ggf. vorhandene Kennzeichnungen oder Muster auf der Balloberfläche verwendet wird). Dieses Merkmal ermöglicht eine automatische Spin-Bestimmung durch Aufnahme des Balls mittels eines Infrarotkamera, die besonders unempfindlich für Störungen im Spektralbereich des sichtbaren Lichts (beispielsweise Blendung durch Scheinwerfer oder Blitzlicht) ist. Zudem wird durch die kontrastierende Infrarot-Absorptions- oder Infrarot-Reemissions-Charakteristik eine selektive Aufnahme der Markierung zum Zweck der Spin-Ermittlung ermöglicht. Der Ball kann hierdurch zusätzlich zu der Markierung weitgehend frei mit weiteren Mustern oder Aufdrucken versehen werden, ohne dass diese die Spin-Ermittlung stören würden.

In einer weiteren Ausführungsform der Erfindung ist die Markierung derart gestaltet, dass sich die Markierungspunkte durch Verwendung einer bestimmten gemeinsamen Farbe in dem sichtbaren Bereich des elektromagnetischen Strahlungsspektrums wiederum kontrastierend von dem Hintergrund der übrigen Balloberfläche abheben. Dieses Merkmal ermöglicht wiederum eine selektive Aufnahme der Markierung zum Zweck der Spin-Ermittlung, beispielsweise durch Aufnahme eines farbgefilterten Lichtbilds des Tischtennisballs oder durch nachträgliche Bildbearbeitung. Auch dieses Merkmal ermöglicht somit, den Ball mit weiteren Mustern oder Aufdrucken (in einer oder mehreren anderen Farben) zu versehen, ohne dass diese die Spin-Ermittlung stören würden.

In einer besonders vorteilhaften Ausführungsform weist der Tischtennisball eine Markierung mit achtzehn Markierungspunkten auf. Diese Markierungspunkte sind nachfolgend allgemein als $P_i$ (mit i = 1,2,...,18) bezeichnet. Diese achtzehn Markierungspunkte sind, jeweils gemessen an dem Ballradius R, in den im Folgenden spezifizierten Zentralpunktabständen $Z_{i,j}$ zu ihren nächsten Nachbarpunkten angeordnet:

Tab. 1: Zentral-Punktabstände für eine bevorzugte Markierung mit achtzehn Markierungspunkten

| Zentralpunkt | Nachbarpunkt | Zentral-Punktabstand | | |
|---|---|---|---|---|
| | | Bezeichnung | Bevorzugter Wert | Toleranz |
| $P_1$ | P2 | $Z_{1,1}$ / R | 0,54 | jeweils $\pm$20%, vorzugsweise $\pm$10%, insbesondere $\pm$5% des bevorzugten Werts, z.B. 0,54 $\pm$ 0,11, vorzugsweise 0,54 $\pm$ 0,05, insbesondere 0,54 $\pm$ 0,03 |
| $P_1$ | $P_5$ | $Z_{1,2}$ / R | 0,91 | |
| $P_1$ | P17 | $Z_{1,3}$ / R | 0,99 | |
| P2 | $P_1$ | $Z_{2,1}$ / R | 0,54 | |
| P2 | P4 | $Z_{2,2}$ / R | 0,72 | |
| P2 | $P_5$ | $Z_{2,3}$ / R | 0,83 | |
| P3 | $P_{10}$ | $Z_{3,1}$ / R | 0,78 | |
| P3 | P15 | $Z_{3,2}$ / R | 0,84 | |
| P3 | $P_8$ | $Z_{3,3}$ / R | 0,87 | |
| P4 | P2 | $Z_{4,1}$ / R | 0,72 | |
| P4 | P12 | $Z_{4,2}$ / R | 0,84 | |
| P4 | $P_5$ | $Z_{4,3}$ / R | 0,85 | |
| $P_5$ | P12 | $Z_{5,1}$ / R | 0,79 | |
| $P_5$ | P2 | $Z_{5,2}$ / R | 0,83 | |
| $P_5$ | P4 | $Z_{5,3}$ / R | 0,85 | |
| P6 | P12 | $Z_{6,1}$ / R | 0,67 | |
| P6 | P18 | $Z_{6,2}$ / R | 0,73 | |
| $P_6$ | P15 | $Z_{6,3}$ / R | 0,94 | |
| $P_7$ | P16 | $Z_{7,1}$ / R | 0,59 | |
| $P_7$ | P17 | $Z_{7,2}$ / R | 0,76 | |
| $P_7$ | P15 | $Z_{7,3}$ / R | 0,90 | |
| $P_8$ | P15 | $Z_{8,1}$ / R | 0,82 | |
| $P_8$ | P3 | $Z_{8,2}$ / R | 0,87 | |
| $P_8$ | $P_{11}$ | $Z_{8,3}$ / R | 0,89 | |
| $P_9$ | P14 | $Z_{9,1}$ / R | 0,51 | |
| $P_9$ | P18 | $Z_{9,2}$ / R | 0,91 | |
| $P_9$ | $P_8$ | $Z_{9,3}$ / R | 0,95 | |
| $P_{10}$ | P13 | $Z_{10,1}$ / R | 0,75 | |
| $P_{10}$ | P17 | $Z_{10,2}$ / R | 0,75 | |

(fortgesetzt)

| Zentralpunkt | Nachbarpunkt | Zentral-Punktabstand | | |
|---|---|---|---|---|
| | | Bezeichnung | Bevorzugter Wert | Toleranz |
| $P_{10}$ | P3 | $Z_{10,3}$ / R | 0,78 | |
| $P_{11}$ | P13 | $Z_{11,1}$ / R | 0,82 | |
| $P_{11}$ | $P_{10}$ | $Z_{11,2}$ / R | 0,88 | |
| $P_{11}$ | $P_8$ | $Z_{11,3}$ / R | 0,89 | |
| P12 | $P_6$ | $Z_{12,1}$ / R | 0,67 | |
| P12 | $P_5$ | $Z_{12,2}$ / R | 0,79 | |
| P12 | $P_4$ | $Z_{12,3}$ / R | 0,84 | |
| P13 | $P_{10}$ | $Z_{13,1}$ / R | 0,75 | |
| P13 | $P_{11}$ | $Z_{13,2}$ / R | 0,82 | |
| P13 | $P_1$ | $Z_{13,3}$ / R | 1,02 | |
| P14 | $P_9$ | $Z_{14,1}$ / R | 0,51 | |
| P14 | $P_4$ | $Z_{14,2}$ / R | 0,92 | |
| P14 | $P_{11}$ | $Z_{14,3}$ / R | 0,98 | |
| P15 | $P_8$ | $Z_{15,1}$ / R | 0,82 | |
| P15 | $P_3$ | $Z_{15,2}$ / R | 0,84 | |
| P15 | $P_7$ | $Z_{15,3}$ / R | 0,90 | |
| P16 | $P_7$ | $Z_{16,1}$ / R | 0,59 | |
| P16 | $P_{17}$ | $Z_{16,2}$ / R | 0,74 | |
| P16 | $P_5$ | $Z_{16,3}$ / R | 1,10 | |
| P17 | $P_{16}$ | $Z_{17,1}$ / R | 0,74 | |
| P17 | $P_{10}$ | $Z_{17,2}$ / R | 0,75 | |
| P17 | $P_7$ | $Z_{17,3}$ / R | 0,76 | |
| P18 | $P_6$ | $Z_{18,1}$ / R | 0,73 | |
| P18 | $P_{12}$ | $Z_{18,2}$ / R | 0,88 | |
| P18 | P9 | $Z_{18,3}$ / R | 0,91 | |

Die Anordnung der Markierungspunkte Pi gemäß Tab. 1 kann sowohl in Kombination mit einem der vorstehend beschriebenen Merkmale der Markierung als auch losgelöst hiervon vorteilhaft bei einem Tischtennisballs nach dem Oberbegriff des Anspruchs 1 eingesetzt werden und wird insofern auch als eigenständige Erfindung angesehen.

Bevorzugt sind weiterhin die Nachbarpunkte eines jeden Vierpunkt-Netzes zueinander in den folgenden Peripherie-Punktabständen $Q_{i,k}$ angeordnet:

Tab. 2: Peripherie-Punktabstände für eine bevorzugte Markierung mit achtzehn Markierungspunkten.

| Nachbarpunkt | Nachbarpunkt | Peripherie-Punktabstand | | |
|---|---|---|---|---|
| | | Bezeichnung | Bevorzugter Wert | Toleranz |
| $P_2$ | $P_5$ | $Q_{1,1}$ / R | 0,83 | jeweils $\pm$20%, vorzugsweise $\pm$10%, insbesondere $\pm$5% des bevorzugten Werts, z.B. 0,83 $\pm$ 0,17, vorzugsweise 0,83 $\pm$ 0,08, insbesondere 0,83 $\pm$ 0,04 |
| $P_5$ | $P_{17}$ | $Q_{1,2}$ / R | 1,57 | |
| $P_{17}$ | $P_2$ | $Q_{1,3}$ / R | 1,53 | |
| $P_1$ | $P_4$ | $Q_{2,1}$ / R | 1,24 | |
| $P_4$ | $P_5$ | $Q_{2,2}$ / R | 0,85 | |
| $P_5$ | $P_1$ | $Q_{2,3}$ / R | 0,91 | |
| $P_{10}$ | P15 | Q3,1 / R | 1,61 | |
| P15 | P8 | $Q_{3,2}$ / R | 0,82 | |
| $P_8$ | $P_{10}$ | $Q_{3,3}$ / R | 1,45 | |
| P2 | P12 | $Q_{4,1}$ / R | 1,39 | |
| $P_{12}$ | $P_5$ | $Q_{4,2}$ / R | 0,79 | |
| $P_5$ | $P_2$ | $Q_{4,3}$ / R | 0,83 | |
| $P_{12}$ | $P_2$ | $Q_{5,1}$ / R | 1,39 | |
| $P_2$ | $P_4$ | $Q_{5,2}$ / R | 0,72 | |
| $P_4$ | $P_{12}$ | $Q_{5,3}$ / R | 0,84 | |
| $P_{12}$ | $P_{18}$ | $Q_{6,1}$ / R | 0,88 | |
| $P_{18}$ | $P_{15}$ | $Q_{6,2}$ / R | 0,97 | |
| $P_{15}$ | $P_{12}$ | $Q_{6,3}$ / R | 1,57 | |
| $P_{16}$ | $P_{17}$ | $Q_{7,1}$ / R | 0,74 | |
| $P_{17}$ | $P_{15}$ | $Q_{7,2}$ / R | 1,60 | |
| $P_{15}$ | $P_{16}$ | $Q_{7,3}$ / R | 1,38 | |
| $P_{15}$ | $P_3$ | $Q_{8,1}$ / R | 0,84 | |
| $P_3$ | $P_{11}$ | $Q_{8,2}$ / R | 1,00 | |

(fortgesetzt)

| Nachbarpunkt | Nachbarpunkt | Peripherie-Punktabstand | | |
|---|---|---|---|---|
| | | Bezeichnung | Bevorzugter Wert | Toleranz |
| $P_{11}$ | $P_{15}$ | $Q_{8,3}$ / R | 1,59 | |
| $P_{14}$ | $P_{18}$ | $Q_{9,1}$ / R | 1,39 | |
| $P_{18}$ | $P_8$ | $Q_{9,2}$ / R | 0,96 | |
| $P_8$ | $P_{14}$ | $Q_{9,3}$ / R | 1,33 | |
| $P_{13}$ | $P_{17}$ | $Q_{10,1}$ / R | 1,22 | |
| $P_{17}$ | $P_3$ | $Q_{10,2}$ / R | 1,11 | |
| $P_3$ | $P_{13}$ | $Q_{10,3}$ / R | 1,45 | |
| $P_{13}$ | $P_{10}$ | $Q_{11,1}$ / R | 0,75 | |
| $P_{10}$ | $P_8$ | $Q_{11,2}$ / R | 1,45 | |
| $P_8$ | $P_{13}$ | $Q_{11,3}$ / R | 1,71 | |
| $P_6$ | $P_5$ | $Q_{12,1}$ / R | 1,21 | |
| $P_5$ | $P_4$ | $Q_{12,2}$ / R | 0,85 | |
| $P_4$ | $P_6$ | $Q_{12,3}$ / R | 1,51 | |
| $P_{10}$ | $P_{11}$ | $Q_{13,1}$ / R | 0,88 | |
| $P_{11}$ | $P_1$ | $Q_{13,2}$ / R | 1,84 | |
| $P_1$ | $P_{10}$ | $Q_{13,3}$ / R | 1,33 | |
| $P_9$ | $P_4$ | $Q_{14,1}$ / R | 1,12 | |
| $P_4$ | $P_{11}$ | $Q_{14,2}$ / R | 1,88 | |
| $P_{11}$ | $P_9$ | $Q_{14,3}$ / R | 1,05 | |
| $P_8$ | $P_3$ | $Q_{15,1}$ / R | 0,87 | |
| $P_3$ | $P_7$ | $Q_{15,2}$ / R | 0,90 | |
| $P_7$ | $P_8$ | $Q_{15,3}$ / R | 1,58 | |
| $P_7$ | $P_{17}$ | $Q_{16,1}$ / R | 0,76 | |
| $P_{17}$ | $P_5$ | $Q_{16,2}$ / R | 1,57 | |
| $P_5$ | $P_7$ | $Q_{16,3}$ / R | 1,67 | |
| $P_{16}$ | $P_{10}$ | $Q_{17,1}$ / R | 1,47 | |
| $P_{10}$ | $P_7$ | $Q_{17,2}$ / R | 1,21 | |
| $P_7$ | $P_{16}$ | $Q_{17,3}$ / R | 0,59 | |
| $P_6$ | $P_{12}$ | $Q_{18,1}$ / R | 0,67 | |
| $P_{12}$ | $P_9$ | $Q_{18,2}$ / R | 1,37 | |
| $P_9$ | $P_6$ | $Q_{18,3}$ / R | 1,62 | |

Nachfolgend wird ein Ausführungsbeispiel der Erfindung anhand einer Zeichnung näher erläutert. Darin zeigen:

Fig. 1 bis 6     in sechs Draufsichtdarstellungen aus sechs zueinander senkrechten Blickrichtungen einen Tischtennisball mit einer kugelförmigen Balloberfläche und einer darauf aufgebrachten Markierung zur messtechnischen Erfassbarmachung des Spins im Flug, wobei die Markierung aus achtzehn auf der Balloberfläche verteilten Markierungspunkten gebildet ist, und

Fig. 7     in Darstellung gemäß Fig. 1 eine Untergruppe ("Vierpunkt-Netz") der Markierung, die aus einem als Zentralpunkt betrachteten ersten Markierungspunkt der Markierung und seinen drei nächsten Nachbarpunkten gebildet wird.

Einander entsprechende Teile, Größen und Strukturen sind in allen Figuren stets mit gleichen Bezugszeichen versehen.

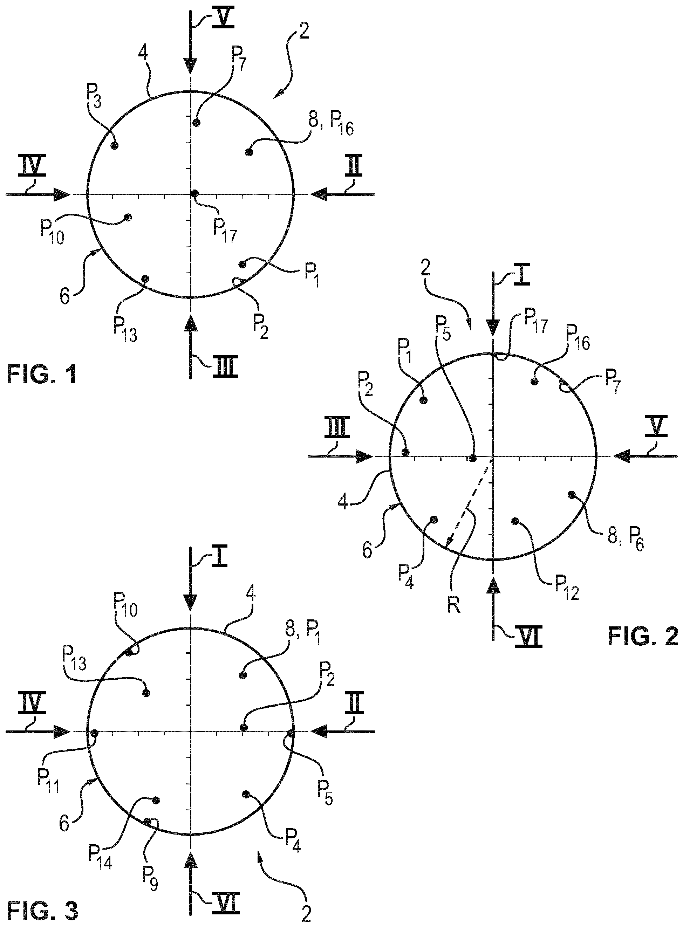

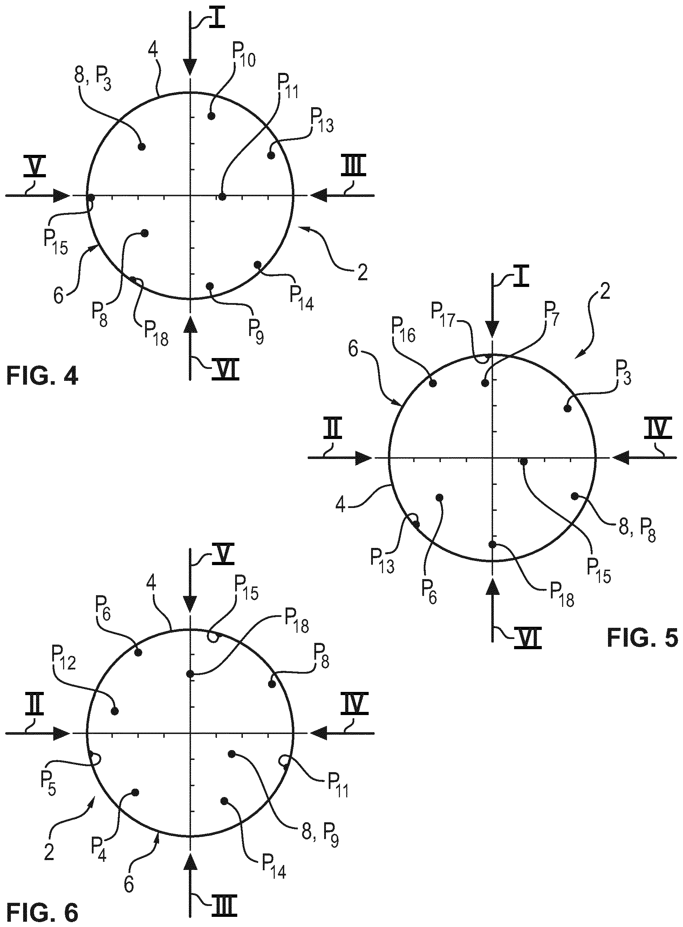

In den Fig. 1 bis 6 ist in sechs Draufsichtdarstellungen aus sechs zueinander senkrechten Blickrichtungen ein (Tischtennis-)Ball 2 dargestellt. Die räumliche Beziehung der in den Fig. 1 bis 6 dargestellten Ansichten zueinander ist in diesen Figuren jeweils durch mit römischen Ziffern beschrifteten Pfeilen verdeutlicht: Die römischen Ziffern geben jeweils die Blickrichtung an, die der jeweils nach dem Zahlwert entsprechenden Figur zugrunde liegt. Der mit der römischen Zahl II beschriftete Pfeil in Fig. 1 gibt also die Blickrichtung an, aus der sich die Ansicht gemäß Fig. 2 ergibt, etc.

Der Ball 2 weist in üblicher Weise eine hohlkugelförmige Hülle 4 aus, insbesondere aus Kunststoff auf. Der Ball 2 hat insbesondere einen für den Tischtennissport regelkonformen Ballradius R von 20 mm (Millimetern) bzw. einen Balldurchmesser von 40 mm.

Um im Flug des Balls 2 die Ballrotation (Spin) messtechnisch erfassbar zu machen, ist eine kugelförmige Balloberfläche 6 der Hülle 4 (und damit des ganzen Balls 2) mit einer Markierung 8 versehen. Die Markierung 8 besteht in dem dargestellten Beispiel aus achtzehn Markierungspunkten $P_i$ (mit i = 1, 2, ..., 18), die über die Balloberfläche 6 verteilt angeordnet sind. In den Fig. 1 bis 6 ist die Markierung 8 zur besseren Veranschaulichung schematisch dargestellt. Perspektivische Verzerrungen der am Rand des jeweils sichtbaren Teils der Balloberfläche 6 liegenden Markierungspunkte $P_i$ sind nicht dargestellt.

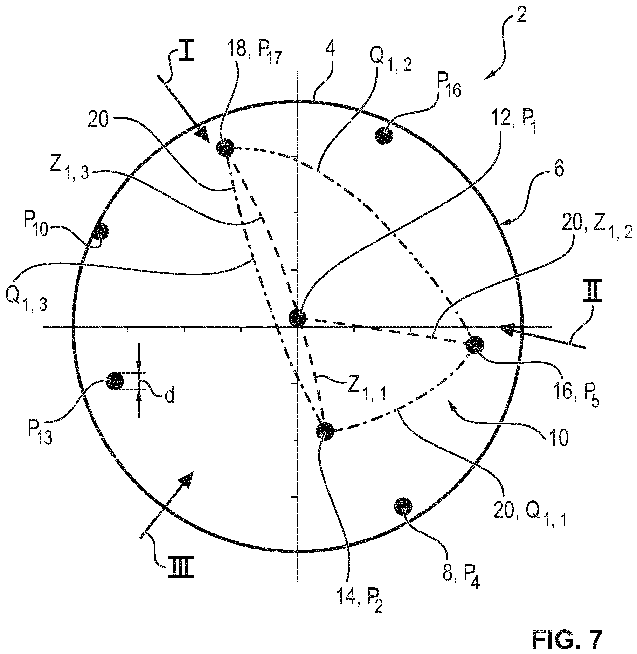

Jeder der Markierungspunkte $P_i$ ist durch eine kreisrunde Fläche mit einem Durchmesser d (Fig. 7) von 3,5 mm (entsprechend 17,5% des Ballradius R) gebildet. Die Markierungspunkte $P_i$ sind dabei mit einem stark IR-absorbierenden und/oder IR-reemittierenden Lack, einer stark IR-absorbierenden und/oder IR-reemittierenden Druckfarbe / Tinte (s. z.B. DE 10 2008 049595 A1) oder einer sonstigen stark IR-absorbierenden und/oder IR-reemittierenden Beschichtung auf die Balloberfläche 6 aufgebracht. Im sichtbaren Spektralbereich des elektromagnetischen Strahlungsspektrums (also im Spektralbereich des sichtbaren Lichts) können die Markierungspunkte $P_i$ dabei eine Farbe aufweisen, die einen Farbkontrast zu der umgebenden Balloberfläche 6 bildet. In diesem Fall heben sich die Markierungspunkte $P_i$ auch optisch sichtbar von der umgebenden Balloberfläche 6 ab. Vorzugsweise sind die Markierungspunkte $P_i$ aber für das menschliche Auge transparent oder weisen eine gleiche oder ähnliche Farbe wie die umgebende Balloberfläche 6 auf. In dem letzteren Fall sind die Markierungspunkte $P_i$ nur in einem Infrarotbild des Balls 2 deutlich erkennbar, für einen menschlichen Betrachter und auf Lichtbildern des Balls 2 dagegen nicht sichtbar oder jedenfalls nicht auffällig.

Durch die vorstehend beschriebene IR-sensitive Ausführung der Markierung 8 wird erreicht, dass sich die Markierungspunkte $P_i$ in einem IR-Bild des Balls 2 stark kontrastierend von der übrigen Balloberfläche 6 abheben. Optional ist der Ball 2 zusätzlich mit einer zusätzlichen Struktur (z.B. einem Aufdruck oder einem Muster) versehen, die mittels mindestens einer nicht oder wenig IR-absorbierenden Farbe auf die Balloberfläche 6 aufgebracht ist. Auch gegenüber dieser ggf. vorhandenen zusätzlichen Struktur hebt sich die Markierung 8 in einem IR-Bild stark ab, so dass im Umkehrschluss die ggf. vorhandene Struktur den durch die Markierung 8 vermittelten Informationsgehalt über die Orientierung des Balls 2 im Raum nicht beeinträchtigt oder verfälscht.

Die Lage der Markierungspunkte $P_i$ auf der Kugeloberfläche 6 ist in der nachfolgenden Tabelle in Kugelkoordinaten, d.h. in Anhängigkeit von dem Polarwinkel $\theta$ und dem Azimutwinkel $\varphi$, angegeben.

Tab. 3: Die Lage der Markierungspunkte $P_i$ auf der Kugeloberfläche des Tischtennisballs in Kugelkoordinaten

| Markierungspunkt | Polarwinkel $\theta$ [°] | Azimutwinkel $\varphi$ [°] |
|---|---|---|
| $P_1$ | 57,6 | 306,8 |
| $P_2$ | 88,2 | 301,2 |
| $P_3$ | 62,1 | 147,4 |
| $P_4$ | 128,2 | 313,0 |
| $P_5$ | 91,7 | 348,5 |

(fortgesetzt)

| Markierungspunkt | Polarwinkel $\theta$ [°] | Azimutwinkel $\varphi$ [°] |
|---|---|---|
| $P_6$ | 112,3 | 56,8 |
| $P_7$ | 44,2 | 84,9 |
| $P_8$ | 111,8 | 151,3 |
| $P_9$ | 151,3 | 206,0 |
| $P_{10}$ | 40,7 | 199,6 |
| $P_{11}$ | 91,1 | 199,2 |
| $P_{12}$ | 129,7 | 16,2 |
| $P_{13}$ | 68,2 | 241,3 |
| $P_{14}$ | 132,0 | 242,1 |
| $P_{15}$ | 91,7 | 107,8 |
| $P_{16}$ | 44,4 | 35,5 |
| $P_{17}$ | 2,2 | 19,1 |
| $P_{18}$ | 145,5 | 91,6 |

Bei dieser Anordnung sind die Markierungspunkte $P_i$ global gesehen in grober Näherung homogen auf der Kugeloberfläche 6 verteilt. Gegenüber einer idealen Gleichverteilung sind die Markierungspunkte $P_i$ aber dennoch in erkennbarer Weise pseudo-zufällig versetzt angeordnet.

Diese Eigenschaften der Punktverteilung werden insbesondere bei Betrachtung der (als Vierpunkt-Netze 10 bezeichneten) lokalen Punktumgebungen deutlich, die jeweils durch einen der Markierungspunkte $P_i$ als Zentralpunkt 12 sowie durch dessen drei nächsten Nachbarpunkte $P_i$ gebildet werden. Entsprechend der Anzahl der Markierungspunkte $P_i$ lässt sich die Markierung 8 in achtzehn teilweise überlappende) Vierpunkt-Netze 10 gliedern.

Das Vierpunkt-Netz 10 des ersten Markierungspunkts $P_1$ ist beispielhaft in Fig. 7 dargestellt. Hierin erkennbar ist, dass

- ein nächster Nachbarpunkt 14 des Markierungspunkts $P_1$ durch den Markierungspunkt $P_2$,
- ein zweitnächster Nachbarpunkt 16 des Markierungspunkts $P_1$ durch den Markierungspunkt $P_5$, und
- ein drittnächster Nachbarpunkt 18 des Markierungspunkts $P_1$ durch den Markierungspunkt $P_{17}$

gebildet sind.

Wie vorstehend definiert, werden die Längen der Orthodromen 20, die den Zentralpunkt 12 eines jeden Vierpunkt-Netzes 10 (im Beispiel gemäß Fig. 7 den Markierungspunkt $P_1$) mit jeweils einem seiner Nachbarpunkte 14, 16 und 18 (im Beispiel gemäß Fig. 7 also den Markierungspunkten $P_2$, $P_5$ bzw. $P_{17}$) verbinden, als Zentral-Punktabstände $Z_{i,j}$ bezeichnet. Die Längen der Orthodromen 20, die die Nachbarpunkte 14, 16, 18 eines jeden Vierpunkt-Netzes 10 untereinander verbinden, werden dagegen - wie ebenfalls vorstehend definiert - als Peripherie-Punktabstände $Q_{i,k}$ bezeichnet. Für das Vierpunkt-Netz 10 des ersten Markierungspunkts $P_1$ sind die entsprechenden Zentralpunktabstände $Z_{1,1}$, $Z_{1,2}$, $Z_{1,3}$ und Peripherie-Punktabstände $Q_{1,1}$, $Q_{1,2}$, $Q_{1,3}$ in Fig. 7 eingetragen.

Für die in Tab. 3 angegebene Anordnung der achtzehn Markierungspunkte $P_i$ ergeben sich die Werte der Zentral-Punktabstände $Z_{i,j}$ aus der rechten Spalte der Tab. 1.

Gemäß Glg. 3 ergibt sich für die Zentral-Punktabstände $Z_{i,j}$ ein Mittelwert $\mu$, der dem 0,80-Fachen des Ballradius R entspricht (d.h. $\mu$ / R = 0,80). Bei einem Ballradius R von 20 mm liegt der gemittelte Punktabstand eines jeden Markierungspunktes $P_i$ von seinen drei nächsten Nachbarpunkten somit bei 16,1 mm (d.h. $\mu$ = 16,1mm). Für die Standardabweichung $\sigma$ gemäß Glg. 2 ergibt sich für die in Tab. 3 angegebene Punktverteilung ein Wert von 0,126. Die auf den Mittelwert $\mu$ normierte Standardabweichung $\sigma$ beträgt also 15,7 % (d.h. $\sigma/\mu$ = 15,7%). Der kleinste (Zentral-)Punktabstand $d_{min}$ ist zwischen den Punkten $P_9$ und $P_{14}$ gebildet und beträgt bei dem oben angegeben Ballradius 10,1mm. Das entspricht 63% des Mittelwerts $\mu$ (d.h. $d_{min}$ = min$\{Z_{i,j} \mid i = 1,...,N; j = 1,2,3\}$ = 63%$\cdot$ $\mu$).

Der minimale Punktabstand $d_{min}$ beträgt dabei 53,6% des nach Glg. 6 berechneten typischen Abstandes dc (Glg. 6) oder - äquivalent ausgedrückt - mindestens 214% des Quotienten des Ballradius R zu der Quadratwurzel der Punktanzahl N bzw. 50,5% des Ballradius R.

Bezüglich der Kenngröße $\sigma/\mu$ liegt die in Tab. 3 angegebene Punktverteilung über einer möglichst idealen Gleichverteilung der Markierungspunkte Pi; für eine solche Gleichverteilung von achtzehn Markierungspunkten $P_i$ wurde in Versuchen ein Vergleichswert von $\sigma/\mu$ = 10,1% gefunden. Andererseits unterscheidet sich die in Tab. 3 angegebene Punktverteilung aber auch von einer durchschnittlichen zufälligen Punktverteilung, bei der die auf den Mittelwert $\mu$ normierte Standardabweichung $\sigma$ deutlich höher liegt, aber der minimale Zentral-Punktabstand regelmäßig die Bedingung gemäß Glg. 4 verletzt.

Die Peripherie-Punktabstände $Q_{i,k}$ für die Punktanordnung aus Tab. 3 ergeben sich aus der der rechten Spalte der Tab. 2. Die gemäß Glg. 8 auf den Mittelwert $\mu$ normierte Spannweite $\Delta Q_i$ dieser Punktanordnung ist für alle Vierpunkt-Netze 10 größer oder gleich 42,8 % ($\min\{\Delta Q_i / \mu; i = 1,2,...,18\} = \Delta Q_{10} / \mu$ = 42,8 %).

Der Minimalwert dieser Kenngröße $\Delta Q_i$, der ein Maß für die lokale Unregelmäßigkeit der Punktverteilung darstellt, liegt bei der in Tab. 3 angegebenen Punktverteilung signifikant höher als bei einer möglichst idealen Gleichverteilung oder einer durchschnittlichen zufälligen Anordnung der achtzehn Markierungspunkte $P_i$.

Die Punktverteilung gemäß Tab. 3 zeichnet sich somit global betrachtet durch eine ausgeprägte Gleichmäßigkeit, lokal betrachtet aber durch eine besonders hohe Unregelmäßigkeit aus. Beide Merkmale erleichtern in Kombination die eindeutige Identifikation der in beliebigen Ansichten des Balls 2 jeweils sichtbaren Markierungspunkte $P_i$ und begünstigen somit entscheidend die Spin-Ermittlung.

Um den Spin des Balls 2 zu bestimmen, wird mittels einer Kamera eine zeitliche Sequenz von Bildern des fliegenden Balls 2 aufgenommen. Hierbei kommt vorzugsweise eine Infrarotkamera zum Einsatz, um den starken Kontrast der Markierungspunkte $P_i$ im IR-Spektrum ausnutzen zu können. Die Kamera wird bevorzugt seitlich einer Tischtennisplatte auf Netzhöhe angeordnet, so dass sie parallel zu der Tischquerrichtung ausgerichtet ist.

Die aufgenommenen Bilder des Balls 2 werden, beispielsweise unter Verwendung des aus US 7,062,082 B2 bekannten Verfahrens, ausgewertet, um den Spin (insbesondere hinsichtlich der Rotationsachse, Rotationsrichtung und Rotationsgeschwindigkeit des Balls 2) zu bestimmen.

Das erfindungsgemäße Markierung 8, insbesondere in der in den Figuren gezeigten und in Tab. 3 im Detail angegebenen Ausführungsform, ermöglicht hierbei eine numerisch besonders unaufwändige und damit besonderes schnelle Spin-Ermittlung, wodurch erstmals ein sinnvoller Einsatz von automatischen Spin-Ermittlungsverfahren im Tischtennissport, insbesondere quasi in Echtzeit, ermöglicht wird.

Die Erfindung wird an den vorstehend beschriebenen Ausführungsbeispielen besonders deutlich, ist hierauf aber nicht beschränkt. Vielmehr können weitere Ausführungsformen der Erfindung aus den Ansprüchen und der vorstehenden Beschreibung abgeleitet werden.


Bezugszeichenliste

| 2 | Ball |
|---|---|
| 4 | Hülle |
| 6 | Balloberfläche |
| 8 | Markierung |
| 10 | Vierpunkt-Netz |
| 12 | Zentralpunkt |
| 14 | (nächster) Nachbarpunkt |
| 16 | (zweitnächster) Nachbarpunkt |
| 18 | (drittnächster) Nachbarpunkt |
| 20 | Orthodrome |

| d | Durchmesser (des Markierungspunkts) |
|---|---|
| $P_i$ | Markierungspunkte (i = 1, 2, ..., 18) |
| $Z_{i,j}$ | Zentral-Punktabstand (i = 1, 2, ..., 18; j = 1, 2, 3) |
| $Q_{i,k}$ | Peripherie-Punktabstand (i = 1, 2, ..., 18; k = 1, 2, 3) |
| R | Ballradius |


**Patentansprüche**

1. Tischtennisball (2) mit einer kugelförmigen Balloberfläche (6) und einer auf der Balloberfläche (6) aufgebrachten Markierung (8) zur messtechnischen Erfassbarmachung einer Ballrotation, wobei die Markierung (8) eine Anzahl

(N) von Markierungspunkten ($P_i$) umfasst,
**dadurch gekennzeichnet,**
**dass** die Markierungspunkte ($P_i$) derart auf der Balloberfläche (6) verteilt sind,

- **dass** die Standardabweichung der Längen ($Z_{i,j}$) der Orthodromen (20) zwischen jedem der Markierungspunkte ($P_i$) und seinen drei nächsten Nachbarpunkten (14,16,18) mindestens 12% des Mittelwerts ($\mu$) dieser Längen ($Z_{i,j}$) beträgt, und
- **dass** die minimale Länge der Orthodromen (20) zwischen jedem der Markierungspunkte ($P_i$) und seinen drei nächsten Nachbarpunkten (14,16,18) mindestens 40% des Mittelwerts ($\mu$) dieser Längen ($Z_{i,j}$) und/oder mindestens 120% des Quotienten des Ballradius (R) zu der Quadratwurzel der Anzahl (N) der Markierungspunkte ($P_i$) beträgt.

2. Tischtennisball (2) nach Anspruch 1,
wobei die Markierungspunkte ($P_i$) derart auf der Balloberfläche (6) verteilt sind, dass die Standardabweichung der Längen ($Z_{i,j}$) der Orthodromen (20) zwischen jedem der Markierungspunkte ($P_i$) und seinen drei nächsten Nachbarpunkten (14,16,18) mindestens 15% des Mittelwerts ($\mu$) dieser Längen ($Z_{i,j}$) beträgt.

3. Tischtennisball (2) nach Anspruch 1 oder 2,
wobei minimale Länge der Orthodromen (20) zwischen jedem der Markierungspunkte ($P_i$) und seinen drei nächsten Nachbarpunkten (14,16,18) mindestens 50%, insbesondere mindestens 60% des Mittelwerts ($\mu$) dieser Längen ($Z_{i,j}$) beträgt.

4. Tischtennisball (2) nach einem der Ansprüche 1 bis 3,
wobei die minimale Länge der Orthodromen (20) zwischen jedem der Markierungspunkte ($P_i$) und seinen drei nächsten Nachbarpunkten (14,16,18) mindestens 150%, insbesondere mindestens 180%, des Quotienten des Ballradius (R) zu der Quadratwurzel der Punktanzahl (N) beträgt.

5. Tischtennisball (2), insbesondere nach einem der Ansprüche 1 bis 4, mit einer kugelförmigen Balloberfläche (6) und einer auf der Balloberfläche (6) aufgebrachten Markierung (8) zur messtechnischen Erfassbarmachung einer Ballrotation, wobei die Markierung (8) eine Anzahl von Markierungspunkten ($P_i$) umfasst,
wobei die Markierungspunkte ($P_i$) derart auf der Balloberfläche (6) verteilt sind, dass die Spannweite ($\Delta Q_i$) der Längen ($Q_{i,k}$) der Orthodromen (20), die die drei nächsten Nachbarpunkte (14,16,18) eines jeden Markierungspunkts ($P_i$) untereinander verbinden, größer als 30%, bevorzugt größer als 35% und insbesondere größer als 40% des Mittelwerts ($\mu$) der Längen ($Z_{i,j}$) der Orthodromen (20) zwischen jedem der Markierungspunkte ($P_i$) und seinen drei nächsten Nachbarpunkten (14,16,18) ist.

6. Tischtennisball (2) nach einem der Ansprüche 1 bis 5,
wobei die Anzahl der Markierungspunkte ($P_i$) zwischen 13 und 25, vorzugsweise zwischen 16 und 21, und insbesondere bei 18 oder 19 liegt.

7. Tischtennisball (2) nach einem der Ansprüche 1 bis 6,
wobei der Durchmesser (d) eines jeden Markierungspunkts ($P_i$) zwischen 10% und 24%, vorzugsweise zwischen 15% und 20% und insbesondere 17,5% des Ballradius (R) beträgt.

8. Tischtennisball (2) nach einem der Ansprüche 1 bis 7,
wobei der Durchmesser (2) eines jeden Markierungspunkts ($P_i$) zwischen 2,0 mm und 4,8 mm, vorzugsweise zwischen 3,0 mm und 4,0 mm und insbesondere 3,5 mm beträgt.

9. Tischtennisball (2) nach einem der Ansprüche 1 bis 8,
wobei alle Markierungspunkte ($P_i$) die gleiche Form und Größe haben.

10. Tischtennisball (2) nach einem der Ansprüche 1 bis 9,
wobei die Markierungspunkte ($P_i$) eine von der übrigen Balloberfläche (6) verschiedene Infrarot-Absorptions- und/oder Infrarot-Reemissions-Charakteristik aufweisen, so dass sich die Markierungspunkte ($P_i$) in dem infraroten Bereich des elektromagnetischen Strahlungsspektrums, insbesondere in einem Infrarotbild des Tischtennisballs (2), von der übrigen Balloberfläche (6) kontrastierend abheben.

11. Tischtennisball (2) nach einem der Ansprüche 1 bis 10,

wobei die Markierungspunkte ($P_i$) eine von der übrigen Balloberfläche (6) verschiedene Farbe aufweisen, so dass sich die Markierungspunkte ($P_i$) in dem sichtbaren Bereich des elektromagnetischen Strahlungsspektrums, insbesondere in einem farbgefilterten Lichtbild des Tischtennisballs (2), von der übrigen Balloberfläche (6) kontrastierend abheben.

12. Tischtennisball (2), insbesondere nach einem der Ansprüche 1 bis 11, mit einer kugelförmigen Balloberfläche (6) und einer auf der Balloberfläche (6) aufgebrachten Markierung (8) zur messtechnischen Erfassbarmachung einer Ballrotation, wobei die Markierung (8) eine Anzahl von Markierungspunkten ($P_i$) umfasst,

- wobei die Markierung (8) achtzehn Markierungspunkte ($P_i$) umfasst,
- wobei ausgehend von einem ersten Markierungspunkt ($P_1$)

- die Länge ($Z_{1,1}$) der Orthodrome (20) zu seinem nächsten Nachbarpunkt ($P_2$) im Verhältnis zu dem Ballradius (R) 0,54 ± 20%, vorzugsweise ± 10%, insbesondere ± 5% beträgt,
- die Länge ($Z_{1,2}$) der Orthodrome (20) zu seinem zweitnächsten Nachbarpunkt ($P_5$) im Verhältnis zu dem Ballradius (R) 0,91 ± 20%, vorzugsweise ± 10%, insbesondere ± 5% beträgt, und
- die Länge ($Z_{1,3}$) der Orthodrome (20) zu seinem drittnächsten Nachbarpunkt ($P_{17}$) im Verhältnis zu dem Ballradius (R) 0,99 ± 20%, vorzugsweise ± 10%, insbesondere ± 5% beträgt,

- wobei ausgehend von einem zweiten Markierungspunkt ($P_2$)

- die Länge ($Z_{2,1}$) der Orthodrome (20) zu seinem nächsten Nachbarpunkt ($P_1$) im Verhältnis zu dem Ballradius (R) 0,54 ± 20%, vorzugsweise ± 10%, insbesondere ± 5% beträgt,
- die Länge ($Z_{2,2}$) der Orthodrome (20) zu seinem zweitnächsten Nachbarpunkt ($P_4$) im Verhältnis zu dem Ballradius (R) 0,72 ± 20%, vorzugsweise ± 10%, insbesondere ± 5% beträgt, und
- die Länge ($Z_{2,3}$) der Orthodrome (20) zu seinem drittnächsten Nachbarpunkt ($P_5$) im Verhältnis zu dem Ballradius (R) 0,83 ± 20%, vorzugsweise ± 10%, insbesondere ± 5% beträgt,

- wobei ausgehend von einem dritten Markierungspunkt ($P_3$)

- die Länge ($Z_{3,1}$) der Orthodrome (20) zu seinem nächsten Nachbarpunkt ($P_{10}$) im Verhältnis zu dem Ballradius (R) 0,78 ± 20%, vorzugsweise ± 10%, insbesondere ± 5% beträgt,
- die Länge ($Z_{3,2}$) der Orthodrome (20) zu seinem zweitnächsten Nachbarpunkt ($P_{15}$) im Verhältnis zu dem Ballradius (R) 0,84 ± 20%, vorzugsweise ± 10%, insbesondere ± 5% beträgt, und
- die Länge ($Z_{3,3}$) der Orthodrome (20) zu seinem drittnächsten Nachbarpunkt ($P_8$) im Verhältnis zu dem Ballradius (R) 0,87 ± 20%, vorzugsweise ± 10%, insbesondere ± 5% beträgt,

- wobei ausgehend von einem vierten Markierungspunkt ($P_4$)

- die Länge ($Z_{4,1}$) der Orthodrome (20) zu seinem nächsten Nachbarpunkt ($P_2$) im Verhältnis zu dem Ballradius (R) 0,72 ± 20%, vorzugsweise ± 10%, insbesondere ± 5% beträgt,
- die Länge ($Z_{4,2}$) der Orthodrome (20) zu seinem zweitnächsten Nachbarpunkt ($P_{12}$) im Verhältnis zu dem Ballradius (R) 0,84 ± 20%, vorzugsweise ± 10%, insbesondere ± 5% beträgt, und
- die Länge ($Z_{4,3}$) der Orthodrome (20) zu seinem drittnächsten Nachbarpunkt ($P_5$) im Verhältnis zu dem Ballradius (R) 0,85 ± 20%, vorzugsweise ± 10%, insbesondere ± 5% beträgt,

- wobei ausgehend von einem fünften Markierungspunkt ($P_5$)

- die Länge ($Z_{5,1}$) der Orthodrome (20) zu seinem nächsten Nachbarpunkt ($P_{12}$) im Verhältnis zu dem Ballradius (R) 0,79 ± 20%, vorzugsweise ± 10%, insbesondere ± 5% beträgt,
- die Länge ($Z_{5,2}$) der Orthodrome (20) zu seinem zweitnächsten Nachbarpunkt ($P_2$) im Verhältnis zu dem Ballradius (R) 0,83 ± 20%, vorzugsweise ± 10%, insbesondere ± 5% beträgt, und
- die Länge ($Z_{5,3}$) der Orthodrome (20) zu seinem drittnächsten Nachbarpunkt ($P_4$) im Verhältnis zu dem Ballradius (R) 0,85 ± 20%, vorzugsweise ± 10%, insbesondere ± 5% beträgt,

- wobei ausgehend von einem sechsten Markierungspunkt ($P_6$)

- die Länge ($Z_{6,1}$) der Orthodrome (20) zu seinem nächsten Nachbarpunkt ($P_{12}$) im Verhältnis zu dem Ballradius (R) 0,67 ± 20%, vorzugsweise ± 10%, insbesondere ± 5% beträgt,
- die Länge $(Z_{6,2})$ der Orthodrome (20) zu seinem zweitnächsten Nachbarpunkt $(P_{18})$ im Verhältnis zu dem Ballradius (R) 0,73 ± 20%, vorzugsweise ± 10%, insbesondere ± 5% beträgt, und
- die Länge $(Z_{6,3})$ der Orthodrome (20) zu seinem drittnächsten Nachbarpunkt $(P_{15})$ im Verhältnis zu dem Ballradius (R) 0,94 ± 20%, vorzugsweise ± 10%, insbesondere ± 5% beträgt,

- wobei ausgehend von einem siebten Markierungspunkt $(P_7)$

- die Länge $(Z_{7,1})$ der Orthodrome (20) zu seinem nächsten Nachbarpunkt $(P_{16})$ im Verhältnis zu dem Ballradius (R) 0,59 ± 20%, vorzugsweise ± 10%, insbesondere ± 5% beträgt,
- die Länge $(Z_{7,2})$ der Orthodrome (20) zu seinem zweitnächsten Nachbarpunkt $(P_{17})$ im Verhältnis zu dem Ballradius (R) 0,76 ± 20%, vorzugsweise ± 10%, insbesondere ± 5% beträgt, und
- die Länge $(Z_{7,3})$ der Orthodrome (20) zu seinem drittnächsten Nachbarpunkt $(P_{15})$ im Verhältnis zu dem Ballradius (R) 0,90 ± 20%, vorzugsweise ± 10%, insbesondere ± 5% beträgt,

- wobei ausgehend von einem achten Markierungspunkt $(P_8)$

- die Länge $(Z_{8,1})$ der Orthodrome (20) zu seinem nächsten Nachbarpunkt $(P_{15})$ im Verhältnis zu dem Ballradius (R) 0,82 ± 20%, vorzugsweise ± 10%, insbesondere ± 5% beträgt,
- die Länge $(Z_{8,2})$ der Orthodrome (20) zu seinem zweitnächsten Nachbarpunkt $(P_3)$ im Verhältnis zu dem Ballradius (R) 0,87 ± 20%, vorzugsweise ± 10%, insbesondere ± 5% beträgt, und
- die Länge $(Z_{8,3})$ der Orthodrome (20) zu seinem drittnächsten Nachbarpunkt $(P_{11})$ im Verhältnis zu dem Ballradius (R) 0,89 ± 20%, vorzugsweise ± 10%, insbesondere ± 5% beträgt,

- wobei ausgehend von einem neunten Markierungspunkt $(P_9)$

- die Länge $(Z_{9,1})$ der Orthodrome (20) zu seinem nächsten Nachbarpunkt $(P_{14})$ im Verhältnis zu dem Ballradius (R) 0,51 ± 20%, vorzugsweise ± 10%, insbesondere ± 5% beträgt,
- die Länge $(Z_{9,2})$ der Orthodrome (20) zu seinem zweitnächsten Nachbarpunkt $(P_{18})$ im Verhältnis zu dem Ballradius (R) 0,91 ± 20%, vorzugsweise ± 10%, insbesondere ± 5% beträgt, und
- die Länge $(Z_{9,3})$ der Orthodrome (20) zu seinem drittnächsten Nachbarpunkt $(P_8)$ im Verhältnis zu dem Ballradius (R) 0,95 ± 20%, vorzugsweise ± 10%, insbesondere ± 5% beträgt,

- wobei ausgehend von einem zehnten Markierungspunkt $(P_{10})$

- die Länge $(Z_{10,1})$ der Orthodrome (20) zu seinem nächsten Nachbarpunkt $(P_{13})$ im Verhältnis zu dem Ballradius (R) 0,75 ± 20%, vorzugsweise ± 10%, insbesondere ± 5% beträgt,
- die Länge $(Z_{10,2})$ der Orthodrome (20) zu seinem zweitnächsten Nachbarpunkt $(P_{17})$ im Verhältnis zu dem Ballradius (R) 0,75 ± 20%, vorzugsweise ± 10%, insbesondere ± 5% beträgt, und
- die Länge $(Z_{10,3})$ der Orthodrome (20) zu seinem drittnächsten Nachbarpunkt $(P_3)$ im Verhältnis zu dem Ballradius (R) 0,78 ± 20%, vorzugsweise ± 10%, insbesondere ± 5% beträgt,

- wobei ausgehend von einem elften Markierungspunkt $(P_{11})$

- die Länge $(Z_{11,1})$ der Orthodrome (20) zu seinem nächsten Nachbarpunkt $(P_{13})$ im Verhältnis zu dem Ballradius (R) 0,82 ± 20%, vorzugsweise ± 10%, insbesondere ± 5% beträgt,
- die Länge $(Z_{11,2})$ der Orthodrome (20) zu seinem zweitnächsten Nachbarpunkt $(P_{10})$ im Verhältnis zu dem Ballradius (R) 0,88 ± 20%, vorzugsweise ± 10%, insbesondere ± 5% beträgt, und
- die Länge $(Z_{11,3})$ der Orthodrome (20) zu seinem drittnächsten Nachbarpunkt $(P_8)$ im Verhältnis zu dem Ballradius (R) 0,89 ± 20%, vorzugsweise ± 10%, insbesondere ± 5% beträgt,

- wobei ausgehend von einem zwölften Markierungspunkt $(P_{12})$

- die Länge $(Z_{12,1})$ der Orthodrome (20) zu seinem nächsten Nachbarpunkt $(P_6)$ im Verhältnis zu dem Ballradius (R) 0,67 ± 20%, vorzugsweise ± 10%, insbesondere ± 5% beträgt,
- die Länge $(Z_{12,2})$ der Orthodrome (20) zu seinem zweitnächsten Nachbarpunkt $(P_5)$ im Verhältnis zu dem Ballradius (R) 0,79 ± 20%, vorzugsweise ± 10%, insbesondere ± 5% beträgt, und
- die Länge $(Z_{12,3})$ der Orthodrome (20) zu seinem drittnächsten Nachbarpunkt $(P_4)$ im Verhältnis zu dem Ballradius (R) 0,84 $\pm$ 20%, vorzugsweise $\pm$ 10%, insbesondere $\pm$ 5% beträgt,

- wobei ausgehend von einem dreizehnten Markierungspunkt ($P_{13}$)

    - die Länge ($Z_{13,1}$) der Orthodrome (20) zu seinem nächsten Nachbarpunkt ($P_{10}$) im Verhältnis zu dem Ballradius (R) 0,75 $\pm$ 20%, vorzugsweise $\pm$ 10%, insbesondere $\pm$ 5% beträgt,
    - die Länge ($Z_{13,2}$) der Orthodrome (20) zu seinem zweitnächsten Nachbarpunkt ($P_{11}$) im Verhältnis zu dem Ballradius (R) 0,82 $\pm$ 20%, vorzugsweise $\pm$ 10%, insbesondere $\pm$ 5% beträgt, und
    - die Länge ($Z_{13,3}$) der Orthodrome (20) zu seinem drittnächsten Nachbarpunkt ($P_1$) im Verhältnis zu dem Ballradius (R) 1,02 $\pm$ 20%, vorzugsweise $\pm$ 10%, insbesondere $\pm$ 5% beträgt,

- wobei ausgehend von einem vierzehnten Markierungspunkt ($P_{14}$)

    - die Länge ($Z_{14,1}$) der Orthodrome (20) zu seinem nächsten Nachbarpunkt ($P_9$) im Verhältnis zu dem Ballradius (R) 0,51 $\pm$ 20%, vorzugsweise $\pm$ 10%, insbesondere $\pm$ 5% beträgt,
    - die Länge ($Z_{14,2}$) der Orthodrome (20) zu seinem zweitnächsten Nachbarpunkt ($P_4$) im Verhältnis zu dem Ballradius (R) 0,92 $\pm$ 20%, vorzugsweise $\pm$ 10%, insbesondere $\pm$ 5% beträgt, und
    - die Länge ($Z_{14,3}$) der Orthodrome (20) zu seinem drittnächsten Nachbarpunkt ($P_{11}$) im Verhältnis zu dem Ballradius (R) 0,98 $\pm$ 20%, vorzugsweise $\pm$ 10%, insbesondere $\pm$ 5% beträgt,

- wobei ausgehend von einem fünfzehnten Markierungspunkt ($P_{15}$)

    - die Länge ($Z_{15,1}$) der Orthodrome (20) zu seinem nächsten Nachbarpunkt ($P_8$) im Verhältnis zu dem Ballradius (R) 0,82 $\pm$ 20%, vorzugsweise $\pm$ 10%, insbesondere $\pm$ 5% $\pm$ 10%, insbesondere $\pm$ 5% beträgt,
    - die Länge ($Z_{15,2}$) der Orthodrome (20) zu seinem zweitnächsten Nachbarpunkt ($P_3$) im Verhältnis zu dem Ballradius (R) 0,84 $\pm$ 20%, vorzugsweise $\pm$ 10%, insbesondere $\pm$ 5% beträgt, und
    - die Länge ($Z_{15,3}$) der Orthodrome (20) zu seinem drittnächsten Nachbarpunkt ($P_7$) im Verhältnis zu dem Ballradius (R) 0,90 $\pm$ 20%, vorzugsweise $\pm$ 10%, insbesondere $\pm$ 5% beträgt,

- wobei ausgehend von einem sechzehnten Markierungspunkt ($P_{16}$)

    - die Länge ($Z_{16,1}$) der Orthodrome (20) zu seinem nächsten Nachbarpunkt ($P_7$) im Verhältnis zu dem Ballradius (R) 0,59 $\pm$ 20%, vorzugsweise $\pm$ 10%, insbesondere $\pm$ 5% beträgt,
    - die Länge ($Z_{16,2}$) der Orthodrome (20) zu seinem zweitnächsten Nachbarpunkt ($P_{17}$) im Verhältnis zu dem Ballradius (R) 0,74 $\pm$ 20%, vorzugsweise $\pm$ 10%, insbesondere $\pm$ 5% beträgt, und
    - die Länge ($Z_{16,3}$) der Orthodrome (20) zu seinem drittnächsten Nachbarpunkt ($P_5$) im Verhältnis zu dem Ballradius (R) 1,10 $\pm$ 20%, vorzugsweise $\pm$ 10%, insbesondere $\pm$ 5% beträgt,

- wobei ausgehend von einem siebzehnten Markierungspunkt ($P_{17}$)

    - die Länge ($Z_{17,1}$) der Orthodrome (20) zu seinem nächsten Nachbarpunkt ($P_{16}$) im Verhältnis zu dem Ballradius (R) 0,74 $\pm$ 20%, vorzugsweise $\pm$ 10%, insbesondere $\pm$ 5% beträgt,
    - die Länge ($Z_{17,2}$) der Orthodrome (20) zu seinem zweitnächsten Nachbarpunkt ($P_{10}$) im Verhältnis zu dem Ballradius (R) 0,75 $\pm$ 20%, vorzugsweise $\pm$ 10%, insbesondere $\pm$ 5% beträgt, und
    - die Länge ($Z_{17,3}$) der Orthodrome (20) zu seinem drittnächsten Nachbarpunkt ($P_7$) im Verhältnis zu dem Ballradius (R) 0,76 $\pm$ 20%, vorzugsweise $\pm$ 10%, insbesondere $\pm$ 5% beträgt, und

- wobei ausgehend von einem achtzehnten Markierungspunkt ($P_{18}$)

    - die Länge ($Z_{18,1}$) der Orthodrome (20) zu seinem nächsten Nachbarpunkt ($P_6$) im Verhältnis zu dem Ballradius (R) 0,73 $\pm$ 20%, vorzugsweise $\pm$ 10%, insbesondere $\pm$ 5% beträgt,
    - die Länge ($Z_{18,2}$) der Orthodrome (20) zu seinem zweitnächsten Nachbarpunkt ($P_{12}$) im Verhältnis zu dem Ballradius (R) 0,88 $\pm$ 20%, vorzugsweise $\pm$ 10%, insbesondere $\pm$ 5% beträgt, und
    - die Länge ($Z_{18,3}$) der Orthodrome (20) zu seinem drittnächsten Nachbarpunkt ($P_9$) im Verhältnis zu dem Ballradius (R) 0,91 $\pm$ 20%, vorzugsweise $\pm$ 10%, insbesondere $\pm$ 5% beträgt.

**13.** Tischtennisball (2) nach Anspruch 12,

- wobei für den ersten Markierungspunkt ($P_1$)

- die Länge ($Q_{1,1}$) der Orthodrome (20) zwischen dem nächsten Nachbarpunkt ($P_2$) und dem zweitnächsten Nachbarpunkt ($P_5$) im Verhältnis zu dem Ballradius (R) 0,83 $\pm$ 20%, vorzugsweise $\pm$ 10%, insbesondere $\pm$ 5% beträgt,
- die Länge ($Q_{1,2}$) der Orthodrome (20) zwischen dem zweitnächsten Nachbarpunkt ($P_5$) zu seinem drittnächsten Nachbarpunkt ($P_{17}$) im Verhältnis zu dem Ballradius (R) 1,57 $\pm$ 20%, vorzugsweise $\pm$ 10%, insbesondere $\pm$ 5% beträgt, und
- die Länge ($Q_{1,3}$) der Orthodrome (20) zwischen dem drittnächsten Nachbarpunkt ($P_{17}$) zu seinem nächsten Nachbarpunkt ($P_2$) im Verhältnis zu dem Ballradius (R) 1,53 $\pm$ 20%, vorzugsweise $\pm$ 10%, insbesondere $\pm$ 5% beträgt,

- wobei für den zweiten Markierungspunkt ($P_2$)

- die Länge ($Q_{2,1}$) der Orthodrome (20) zwischen dem nächsten Nachbarpunkt ($P_1$) und dem zweitnächsten Nachbarpunkt ($P_4$) im Verhältnis zu dem Ballradius (R) 1,24 $\pm$ 20%, vorzugsweise $\pm$ 10%, insbesondere $\pm$ 5% beträgt,
- die Länge ($Q_{2,2}$) der Orthodrome (20) zwischen dem zweitnächsten Nachbarpunkt ($P_4$) zu seinem drittnächsten Nachbarpunkt ($P_5$) im Verhältnis zu dem Ballradius (R) 0,85 $\pm$ 20%, vorzugsweise $\pm$ 10%, insbesondere $\pm$ 5% beträgt, und
- die Länge ($Q_{2,3}$) der Orthodrome (20) zwischen dem drittnächsten Nachbarpunkt ($P_5$) zu seinem nächsten Nachbarpunkt ($P_1$) im Verhältnis zu dem Ballradius (R) 0,91 $\pm$ 20%, vorzugsweise $\pm$ 10%, insbesondere $\pm$ 5% beträgt,

- wobei für den dritten Markierungspunkt ($P_3$)

- die Länge ($Q_{3,1}$) der Orthodrome (20) zwischen dem nächsten Nachbarpunkt ($P_{10}$) und dem zweitnächsten Nachbarpunkt ($P_{15}$) im Verhältnis zu dem Ballradius (R) 1,61 $\pm$ 20%, vorzugsweise $\pm$ 10%, insbesondere $\pm$ 5% beträgt,
- die Länge ($Q_{3,2}$) der Orthodrome (20) zwischen dem zweitnächsten Nachbarpunkt ($P_{15}$) zu seinem drittnächsten Nachbarpunkt ($P_8$) im Verhältnis zu dem Ballradius (R) 0,82 $\pm$ 20%, vorzugsweise $\pm$ 10%, insbesondere $\pm$ 5% beträgt, und
- die Länge ($Q_{3,3}$) der Orthodrome (20) zwischen dem drittnächsten Nachbarpunkt ($P_8$) zu seinem nächsten Nachbarpunkt ($P_{10}$) im Verhältnis zu dem Ballradius (R) 1,45 $\pm$ 20%, vorzugsweise $\pm$ 10%, insbesondere $\pm$ 5% beträgt,

- wobei für den vierten Markierungspunkt ($P_4$)

- die Länge ($Q_{4,1}$) der Orthodrome (20) zwischen dem nächsten Nachbarpunkt ($P_2$) und dem zweitnächsten Nachbarpunkt ($P_{12}$) im Verhältnis zu dem Ballradius (R) 1,39 $\pm$ 20%, vorzugsweise $\pm$ 10%, insbesondere $\pm$ 5% beträgt,
- die Länge ($Q_{4,2}$) der Orthodrome (20) zwischen dem zweitnächsten Nachbarpunkt ($P_{12}$) zu seinem drittnächsten Nachbarpunkt ($P_5$) im Verhältnis zu dem Ballradius (R) 0,79 $\pm$ 20%, vorzugsweise $\pm$ 10%, insbesondere $\pm$ 5% beträgt, und
- die Länge ($Q_{4,3}$) der Orthodrome (20) zwischen dem drittnächsten Nachbarpunkt ($P_5$) zu seinem nächsten Nachbarpunkt ($P_2$) im Verhältnis zu dem Ballradius (R) 0,83 $\pm$ 20%, vorzugsweise $\pm$ 10%, insbesondere $\pm$ 5% beträgt,

- wobei für den fünften Markierungspunkt ($P_5$)

- die Länge ($Q_{5,1}$) der Orthodrome (20) zwischen dem nächsten Nachbarpunkt ($P_{12}$) und dem zweitnächsten Nachbarpunkt ($P_2$) im Verhältnis zu dem Ballradius (R) 1,39 $\pm$ 20%, vorzugsweise $\pm$ 10%, insbesondere $\pm$ 5% beträgt,
- die Länge ($Q_{5,2}$) der Orthodrome (20) zwischen dem zweitnächsten Nachbarpunkt ($P_2$) zu seinem drittnächsten Nachbarpunkt ($P_4$) im Verhältnis zu dem Ballradius (R) 0,72 $\pm$ 20%, vorzugsweise $\pm$ 10%, insbesondere $\pm$ 5% beträgt, und
- die Länge ($Q_{5,3}$) der Orthodrome (20) zwischen dem drittnächsten Nachbarpunkt ($P_4$) zu seinem nächsten Nachbarpunkt ($P_{12}$) im Verhältnis zu dem Ballradius (R) 0,84 $\pm$ 20%, vorzugsweise $\pm$ 10%, insbesondere

± 5% beträgt,

- wobei für den sechsten Markierungspunkt ($P_6$)

- die Länge ($Q_{6,1}$) der Orthodrome (20) zwischen dem nächsten Nachbarpunkt ($P_{12}$) und dem zweitnächsten Nachbarpunkt ($P_{18}$) im Verhältnis zu dem Ballradius (R) 0,88 ± 20%, vorzugsweise ± 10%, insbesondere ± 5% beträgt,
- die Länge ($Q_{6,2}$) der Orthodrome (20) zwischen dem zweitnächsten Nachbarpunkt ($P_{18}$) zu seinem drittnächsten Nachbarpunkt ($P_{15}$) im Verhältnis zu dem Ballradius (R) 0,97 ± 20%, vorzugsweise ± 10%, insbesondere ± 5% beträgt, und
- die Länge ($Q_{6,3}$) der Orthodrome (20) zwischen dem drittnächsten Nachbarpunkt ($P_{15}$) zu seinem nächsten Nachbarpunkt ($P_{12}$) im Verhältnis zu dem Ballradius (R) 1,57 ± 20%, vorzugsweise ± 10%, insbesondere ± 5% beträgt,

- wobei für den siebten Markierungspunkt ($P_7$)

- die Länge ($Q_{7,1}$) der Orthodrome (20) zwischen dem nächsten Nachbarpunkt ($P_{16}$) und dem zweitnächsten Nachbarpunkt ($P_{17}$) im Verhältnis zu dem Ballradius (R) 0,74 ± 20%, vorzugsweise ± 10%, insbesondere ± 5% beträgt,
- die Länge ($Q_{7,2}$) der Orthodrome (20) zwischen dem zweitnächsten Nachbarpunkt ($P_{17}$) zu seinem drittnächsten Nachbarpunkt ($P_{15}$) im Verhältnis zu dem Ballradius (R) 1,60 ± 20%, vorzugsweise ± 10%, insbesondere ± 5% beträgt, und
- die Länge ($Q_{7,3}$) der Orthodrome (20) zwischen dem drittnächsten Nachbarpunkt zu seinem nächsten Nachbarpunkt ($P_{16}$) im Verhältnis zu dem Ballradius (R) 1,38 ± 20%, vorzugsweise ± 10%, insbesondere ± 5% beträgt,

- wobei für den achten Markierungspunkt ($P_8$)

- die Länge ($Q_{8,1}$) der Orthodrome (20) zwischen dem nächsten Nachbarpunkt und dem zweitnächsten Nachbarpunkt ($P_3$) im Verhältnis zu dem Ballradius (R) 0,84 ± 20%, vorzugsweise ± 10%, insbesondere ± 5% beträgt,
- die Länge ($Q_{8,2}$) der Orthodrome (20) zwischen dem zweitnächsten Nachbarpunkt ($P_3$) zu seinem drittnächsten Nachbarpunkt ($P_{11}$) im Verhältnis zu dem Ballradius (R) 1,00 ± 20%, vorzugsweise ± 10%, insbesondere ± 5% beträgt, und
- die Länge ($Q_{8,3}$) der Orthodrome (20) zwischen dem drittnächsten Nachbarpunkt ($P_{11}$) zu seinem nächsten Nachbarpunkt im Verhältnis zu dem Ballradius (R) 1,59 ± 20%, vorzugsweise ± 10%, insbesondere ± 5% beträgt,

- wobei für den neunten Markierungspunkt ($P_9$)

- die Länge ($Q_{9,1}$) der Orthodrome (20) zwischen dem nächsten Nachbarpunkt ($P_{14}$) und dem zweitnächsten Nachbarpunkt ($P_{18}$) im Verhältnis zu dem Ballradius (R) 1,39 ± 20%, vorzugsweise ± 10%, insbesondere ± 5% beträgt,
- die Länge ($Q_{9,2}$) der Orthodrome (20) zwischen dem zweitnächsten Nachbarpunkt ($P_{18}$) zu seinem drittnächsten Nachbarpunkt ($P_8$) im Verhältnis zu dem Ballradius (R) 0,96 ± 20%, vorzugsweise ± 10%, insbesondere ± 5% beträgt, und
- die Länge ($Q_{9,3}$) der Orthodrome (20) zwischen dem drittnächsten Nachbarpunkt ($P_8$) zu seinem nächsten Nachbarpunkt ($P_{14}$) im Verhältnis zu dem Ballradius (R) 1,33 ± 20%, vorzugsweise ± 10%, insbesondere ± 5% beträgt,

- wobei für den zehnten Markierungspunkt ($P_{10}$)

- die Länge ($Q_{10,1}$) der Orthodrome (20) zwischen dem nächsten Nachbarpunkt ($P_{13}$) und dem zweitnächsten Nachbarpunkt ($P_{17}$) im Verhältnis zu dem Ballradius (R) 1,22 ± 20%, vorzugsweise ± 10%, insbesondere ± 5% beträgt,
- die Länge ($Q_{10,2}$) der Orthodrome (20) zwischen dem zweitnächsten Nachbarpunkt ($P_{17}$) zu seinem drittnächsten Nachbarpunkt ($P_3$) im Verhältnis zu dem Ballradius (R) 1,11 ± 20%, vorzugsweise ± 10%, insbesondere ± 5% beträgt, und

- die Länge ($Q_{10,3}$) der Orthodrome (20) zwischen dem drittnächsten Nachbarpunkt ($P_3$) zu seinem nächsten Nachbarpunkt ($P_{13}$) im Verhältnis zu dem Ballradius (R) 1,45 $\pm$ 20%, vorzugsweise $\pm$ 10%, insbesondere $\pm$ 5% beträgt,

- wobei für den elften Markierungspunkt ($P_{11}$)

- die Länge ($Q_{11,1}$) der Orthodrome (20) zwischen dem nächsten Nachbarpunkt ($P_{13}$) und dem zweitnächsten Nachbarpunkt ($P_{10}$) im Verhältnis zu dem Ballradius (R) 0,75 $\pm$ 20%, vorzugsweise $\pm$ 10%, insbesondere $\pm$ 5% beträgt,
- die Länge ($Q_{11,2}$) der Orthodrome (20) zwischen dem zweitnächsten Nachbarpunkt ($P_{10}$) zu seinem drittnächsten Nachbarpunkt ($P_8$) im Verhältnis zu dem Ballradius (R) 1,45 $\pm$ 20%, vorzugsweise $\pm$ 10%, insbesondere $\pm$ 5% beträgt, und
- die Länge ($Q_{11,3}$) der Orthodrome (20) zwischen dem drittnächsten Nachbarpunkt ($P_8$) zu seinem nächsten Nachbarpunkt ($P_{13}$) im Verhältnis zu dem Ballradius (R) 1,71 $\pm$ 20%, vorzugsweise $\pm$ 10%, insbesondere $\pm$ 5% beträgt,

- wobei für den zwölften Markierungspunkt ($P_{12}$)

- die Länge ($Q_{12,1}$) der Orthodrome (20) zwischen dem nächsten Nachbarpunkt ($P_6$) und dem zweitnächsten Nachbarpunkt ($P_5$) im Verhältnis zu dem Ballradius (R) 1,21 $\pm$ 20%, vorzugsweise $\pm$ 10%, insbesondere $\pm$ 5% beträgt,
- die Länge ($Q_{12,2}$) der Orthodrome (20) zwischen dem zweitnächsten Nachbarpunkt ($P_5$) zu seinem drittnächsten Nachbarpunkt ($P_4$) im Verhältnis zu dem Ballradius (R) 0,85 $\pm$ 20%, vorzugsweise $\pm$ 10%, insbesondere $\pm$ 5% beträgt, und
- die Länge ($Q_{12,3}$) der Orthodrome (20) zwischen dem drittnächsten Nachbarpunkt ($P_4$) zu seinem nächsten Nachbarpunkt ($P_6$) im Verhältnis zu dem Ballradius (R) 1,51 $\pm$ 20%, vorzugsweise $\pm$ 10%, insbesondere $\pm$ 5% beträgt,

- wobei für den dreizehnten Markierungspunkt ($P_{13}$)

- die Länge ($Q_{13,1}$) der Orthodrome (20) zwischen dem nächsten Nachbarpunkt ($P_{10}$) und dem zweitnächsten Nachbarpunkt ($P_{11}$) im Verhältnis zu dem Ballradius (R) 0,88 $\pm$ 20%, vorzugsweise $\pm$ 10%, insbesondere $\pm$ 5% beträgt,
- die Länge ($Q_{13,2}$) der Orthodrome (20) zwischen dem zweitnächsten Nachbarpunkt ($P_{11}$) zu seinem drittnächsten Nachbarpunkt ($P_1$) im Verhältnis zu dem Ballradius (R) 1,84 $\pm$ 20%, vorzugsweise $\pm$ 10%, insbesondere $\pm$ 5% beträgt, und
- die Länge ($Q_{13,3}$) der Orthodrome (20) zwischen dem drittnächsten Nachbarpunkt ($P_1$) zu seinem nächsten Nachbarpunkt ($P_{10}$) im Verhältnis zu dem Ballradius (R) 1,33 $\pm$ 20%, vorzugsweise $\pm$ 10%, insbesondere $\pm$ 5% beträgt,

- wobei für den vierzehnten Markierungspunkt ($P_{14}$)

- die Länge ($Q_{14,1}$) der Orthodrome (20) zwischen dem nächsten Nachbarpunkt ($P_9$) und dem zweitnächsten Nachbarpunkt ($P_4$) im Verhältnis zu dem Ballradius (R) 1,12 $\pm$ 20%, vorzugsweise $\pm$ 10%, insbesondere $\pm$ 5% beträgt,
- die Länge ($Q_{14,2}$) der Orthodrome (20) zwischen dem zweitnächsten Nachbarpunkt ($P_4$) zu seinem drittnächsten Nachbarpunkt ($P_{11}$) im Verhältnis zu dem Ballradius (R) 1,88 $\pm$ 20%, vorzugsweise $\pm$ 10%, insbesondere $\pm$ 5% beträgt, und
- die Länge ($Q_{14,3}$) der Orthodrome (20) zwischen dem drittnächsten Nachbarpunkt ($P_{11}$) zu seinem nächsten Nachbarpunkt ($P_9$) im Verhältnis zu dem Ballradius (R) 1,05 $\pm$ 20%, vorzugsweise $\pm$ 10%, insbesondere $\pm$ 5% beträgt,

- wobei für den fünfzehnten Markierungspunkt

- die Länge ($Q_{15,1}$) der Orthodrome (20) zwischen dem nächsten Nachbarpunkt ($P_8$) und dem zweitnächsten Nachbarpunkt ($P_3$) im Verhältnis zu dem Ballradius (R) 0,87 $\pm$ 20%, vorzugsweise $\pm$ 10%, insbesondere $\pm$ 5% beträgt,
- die Länge ($Q_{15,2}$) der Orthodrome (20) zwischen dem zweitnächsten Nachbarpunkt ($P_3$) zu seinem dritt-

nächsten Nachbarpunkt ($P_7$) im Verhältnis zu dem Ballradius (R) 0,90 $\pm$ 20%, vorzugsweise $\pm$ 10%, insbesondere $\pm$ 5% beträgt, und
- die Länge ($Q_{15,3}$) der Orthodrome (20) zwischen dem drittnächsten Nachbarpunkt ($P_7$) zu seinem nächsten Nachbarpunkt ($P_8$) im Verhältnis zu dem Ballradius (R) 1,58 $\pm$ 20%, vorzugsweise $\pm$ 10%, insbesondere $\pm$ 5% beträgt,

- wobei für den sechszehnten Markierungspunkt ($P_{16}$)

- die Länge ($Q_{16,1}$) der Orthodrome (20) zwischen dem nächsten Nachbarpunkt ($P_7$) und dem zweitnächsten Nachbarpunkt ($P_{17}$) im Verhältnis zu dem Ballradius (R) 0,76 $\pm$ 20%, vorzugsweise $\pm$ 10%, insbesondere $\pm$ 5% beträgt,
- die Länge ($Q_{16,2}$) der Orthodrome (20) zwischen dem zweitnächsten Nachbarpunkt ($P_{17}$) zu seinem drittnächsten Nachbarpunkt ($P_5$) im Verhältnis zu dem Ballradius (R) 1,57 $\pm$ 20%, vorzugsweise $\pm$ 10%, insbesondere $\pm$ 5% beträgt, und
- die Länge ($Q_{16,3}$) der Orthodrome (20) zwischen dem drittnächsten Nachbarpunkt ($P_5$) zu seinem nächsten Nachbarpunkt ($P_7$) im Verhältnis zu dem Ballradius (R) 1,67 $\pm$ 20%, vorzugsweise $\pm$ 10%, insbesondere $\pm$ 5% beträgt,

- wobei für den siebzehnten Markierungspunkt ($P_{17}$)

- die Länge ($Q_{17,1}$) der Orthodrome (20) zwischen dem nächsten Nachbarpunkt ($P_{16}$) und dem zweitnächsten Nachbarpunkt ($P_{10}$) im Verhältnis zu dem Ballradius (R) 1,47 $\pm$ 20%, vorzugsweise $\pm$ 10%, insbesondere $\pm$ 5% beträgt,
- die Länge ($Q_{17,2}$) der Orthodrome (20) zwischen dem zweitnächsten Nachbarpunkt ($P_{10}$) zu seinem drittnächsten Nachbarpunkt ($P_7$) im Verhältnis zu dem Ballradius (R) 1,21 $\pm$ 20%, vorzugsweise $\pm$ 10%, insbesondere $\pm$ 5% beträgt, und
- die Länge ($Q_{17,3}$) der Orthodrome (20) zwischen dem drittnächsten Nachbarpunkt ($P_7$) zu seinem nächsten Nachbarpunkt ($P_{16}$) im Verhältnis zu dem Ballradius (R) 0,59 $\pm$ 20%, vorzugsweise $\pm$ 10%, insbesondere $\pm$ 5% beträgt, und

- wobei für den achtzehnten Markierungspunkt ($P_{18}$)

- die Länge ($Q_{18,1}$) der Orthodrome (20) zwischen dem nächsten Nachbarpunkt ($P_6$) und dem zweitnächsten Nachbarpunkt ($P_{12}$) im Verhältnis zu dem Ballradius (R) 0,67 $\pm$ 20%, vorzugsweise $\pm$ 10%, insbesondere $\pm$ 5% beträgt,
- die Länge ($Q_{18,2}$) der Orthodrome (20) zwischen dem zweitnächsten Nachbarpunkt ($P_{12}$) zu seinem drittnächsten Nachbarpunkt ($P_9$) im Verhältnis zu dem Ballradius (R) 1,37 $\pm$ 20%, vorzugsweise $\pm$ 10%, insbesondere $\pm$ 5% beträgt, und
- die Länge ($Q_{18,3}$) der Orthodrome (20) zwischen dem drittnächsten Nachbarpunkt ($P_9$) zu seinem nächsten Nachbarpunkt ($P_6$) im Verhältnis zu dem Ballradius (R) 1,62 $\pm$ 20%, vorzugsweise $\pm$ 10%, insbesondere $\pm$ 5% beträgt.

## Claims

1. Table tennis ball (2) having a spherical ball surface (6) and a marking (8) applied to the ball surface (6) for making a ball rotation metrologically detectable, wherein the marking (8) comprises a number (N) of marking points ($P_i$), **characterized in that**
the marking points ($P_i$) are distributed on the ball surface (6) in such a way

- that the standard deviation of the lengths ($Z_{i,j}$) of the orthodromes (20) between each of the marking points ($P_i$) and its three closest neighbouring points (14, 16, 18) is at least 12% of the mean value ($\mu$) of these lengths ($Z_{i,j}$), and
- that the minimum length of the orthodromes (20) between each of the marking points ($P_i$) and its three closest neighbouring points (14, 16, 18) is at least 40% of the mean value ($\mu$) of these lengths ($Z_{i,j}$) and/or at least 120% of the quotient of the ball radius (R) to the square root of the number (N) of the marking points ($P_i$).

2. Table tennis ball (2) according to Claim 1,

wherein the marking points ($P_i$) are distributed on the ball surface (6) in such a way that the standard deviation of the lengths ($Z_{i,j}$) of the orthodromes (20) between each of the marking points ($P_i$) and its three closest neighbouring points (14, 16, 18) is at least 15% of the mean value ($\mu$) of these lengths ($Z_{i,j}$).

3. Table tennis ball (2) according to Claim 1 or 2,
   wherein the minimum length of the orthodromes (20) between each of the marking points ($P_i$) and its three closest neighbouring points (14, 16, 18) is at least 50%, in particular at least 60% of the mean value ($\mu$) of these lengths ($Z_{i,j}$).

4. Table tennis ball (2) according to any one of Claims 1 to 3,
   wherein the minimum length of the orthodromes (20) between each of the marking points ($P_i$) and its three closest neighbouring points (14, 16, 18) is at least 150%, in particular at least 180%, of the quotient of the ball radius (R) to the square root of the point number (N) .

5. Table tennis ball (2), in particular according to any one of Claims 1 to 4, having a spherical ball surface (6) and a marking (8) applied to the ball surface (6) for making a ball rotation metrologically detectable, wherein the marking (8) comprises a number of marking points ($P_i$),
   wherein the marking points ($P_i$) are distributed on the ball surface (6) in such a way that the range ($\Delta Q_i$) of the lengths ($Q_{i,k}$) of the orthodromes (20), which connect the three closest neighbouring points (14, 16, 18) of each marking point ($P_i$) to one another, is greater than 30%, preferably greater than 350, and in particular greater than 40% of the mean value ($\mu$) of the lengths ($Z_{i,j}$) of the orthodromes (20) between each of the marking points ($P_i$) and its three closest neighbouring points (14, 16, 18).

6. Table tennis ball (2) according to any one of Claims 1 to 5,
   wherein the number of the marking points ($P_i$) is between 13 and 25, preferably between 16 and 21, and in particular is 18 or 19.

7. Table tennis ball (2) according to any one of Claims 1 to 6,
   wherein the diameter (d) of each marking point ($P_i$) is between 10% and 24%, preferably between 15% and 20%, and in particular is 17.5% of the ball radius (R).

8. Table tennis ball (2) according to any one of Claims 1 to 7,
   wherein the diameter (2) of each marking point ($P_i$) is between 2.0 mm and 4.8 mm, preferably between 3.0 mm and 4.0 mm, and in particular is 3.5 mm.

9. Table tennis ball (2) according to any one of Claims 1 to 8,
   wherein all marking points ($P_i$) have the same shape and size.

10. Table tennis ball (2) according to any one of Claims 1 to 9,
    wherein the marking points ($P_i$) have an infrared absorption and/or infrared reemission characteristic different from the remaining ball surface (6), so that the marking points ($P_i$) stand out from the remaining ball surface (6) in a contrasting manner in the infrared range of the electromagnetic radiation spectrum, in particular in an infrared image of the table tennis ball (2).

11. Table tennis ball (2) according to any one of Claims 1 to 10,
    wherein the marking points ($P_i$) have a colour different from the remaining ball surface (6), so that the marking points ($P_i$) stand out from the remaining ball surface (6) in a contrasting manner in the visible range of the electromagnetic radiation spectrum, in particular in a colour-filtered light image of the table tennis ball (2) .

12. Table tennis ball (2), in particular according to any one of Claims 1 to 11, having a spherical ball surface (6) and a marking (8) applied to the ball surface (6) for making a ball rotation metrologically detectable, wherein the marking (8) comprises a number of marking points ($P_i$),

    - wherein the marking (8) comprises eighteen marking points ($P_i$),
    - wherein starting from a first marking point ($P_1$)

      - the length ($Z_{1,1}$) of the orthodrome (20) to its closest neighbouring point ($P_2$) in relation to the ball radius (R) is 0.54 $\pm$ 20%, preferably $\pm$ 10%, in particular + 5%,
      - the length ($Z_{1,2}$) of the orthodrome (20) to its second-closest neighbouring point ($P_5$) in relation to the ball radius (R) is 0.91 ± 20%, preferably ± 10%, in particular ± 50, and
- the length ($Z_{1,3}$) of the orthodrome (20) to its third-closest neighbouring point ($P_{17}$) in relation to the ball radius (R) is 0.99 ± 20%, preferably ± 10%, in particular ± 50,

- wherein starting from a second marking point ($P_2$)

- the length ($Z_{2,1}$) of the orthodrome (20) to its closest neighbouring point ($P_1$) in relation to the ball radius (R) is 0.54 ± 20%, preferably ± 10%, in particular ± 5%,
- the length ($Z_{2,2}$) of the orthodrome (20) to its second-closest neighbouring point ($P_4$) in relation to the ball radius (R) is 0.72 ± 20%, preferably ± 10%, in particular ± 50, and
- the length ($Z_{2,3}$) of the orthodrome (20) to its third-closest neighbouring point ($P_5$) in relation to the ball radius (R) is 0.83 ± 20%, preferably ± 10%, in particular ± 50,

- wherein starting from a third marking point ($P_3$)

- the length ($Z_{3,1}$) of the orthodrome (20) to its closest neighbouring point ($P_{10}$) in relation to the ball radius (R) is 0.78 ± 20%, preferably ± 10%, in particular + 5%,
- the length ($Z_{3,2}$) of the orthodrome (20) to its second-closest neighbouring point in relation to the ball radius (R) is 0.84 ± 20%, preferably ± 10%, in particular ± 50, and
- the length ($Z_{3,3}$) of the orthodrome (20) to its third-closest neighbouring point ($P_8$) in relation to the ball radius (R) is 0.87 ± 20%, preferably ± 10%, in particular ± 50,

- wherein starting from a fourth marking point ($P_4$)

- the length ($Z_{4,1}$) of the orthodrome (20) to its closest neighbouring point ($P_2$) in relation to the ball radius (R) is 0.72 ± 20%, preferably ± 10%, in particular ± 5%,
- the length ($Z_{4,2}$) of the orthodrome (20) to its second-closest neighbouring point ($P_{12}$) in relation to the ball radius (R) is 0.84 ± 20%, preferably ± 10%, in particular ± 50, and
- the length ($Z_{4,3}$) of the orthodrome (20) to its third-closest neighbouring point ($P_5$) in relation to the ball radius (R) is 0.85 ± 20%, preferably ± 10%, in particular ± 50,

- wherein starting from a fifth marking point ($P_5$)

- the length ($Z_{5,1}$) of the orthodrome (20) to its closest neighbouring point ($P_{12}$) in relation to the ball radius (R) is 0.79 ± 20%, preferably ± 10%, in particular + 5%,
- the length ($Z_{5,2}$) of the orthodrome (20) to its second-closest neighbouring point ($P_2$) in relation to the ball radius (R) is 0.83 ± 20%, preferably ± 10%, in particular ± 50, and
- the length ($Z_{5,3}$) of the orthodrome (20) to its third-closest neighbouring point ($P_4$) in relation to the ball radius (R) is 0.85 ± 20%, preferably ± 10%, in particular ± 50,

- wherein starting from a sixth marking point ($P_6$)

- the length ($Z_{6,1}$) of the orthodrome (20) to its closest neighbouring point ($P_{12}$) in relation to the ball radius (R) is 0.67 ± 20%, preferably ± 10%, in particular + 5%,
- the length ($Z_{6,2}$) of the orthodrome (20) to its second-closest neighbouring point ($P_{18}$) in relation to the ball radius (R) is 0.73 ± 20%, preferably ± 10%, in particular ± 50, and
- the length ($Z_{6,3}$) of the orthodrome (20) to its third-closest neighbouring point in relation to the ball radius (R) is 0.94 ± 20%, preferably ± 10%, in particular ± 50,

- wherein starting from a seventh marking point ($P_7$)

- the length ($Z_{7,1}$) of the orthodrome (20) to its closest neighbouring point ($P_{16}$) in relation to the ball radius (R) is 0.59 ± 20%, preferably ± 10%, in particular ± 5%,
- the length ($Z_{7,2}$) of the orthodrome (20) to its second-closest neighbouring point ($P_{17}$) in relation to the ball radius (R) is 0.76 ± 20%, preferably ± 10%, in particular ± 50, and
- the length ($Z_{7,3}$) of the orthodrome (20) to its third-closest neighbouring point in relation to the ball radius (R) is 0.90 ± 20%, preferably ± 10%, in particular ± 50,

- wherein starting from an eighth marking point ($P_8$)

- the length ($Z_{8,1}$) of the orthodrome (20) to its closest neighbouring point in relation to the ball radius (R) is 0.82 $\pm$ 20%, preferably $\pm$ 10%, in particular + 5%,
- the length ($Z_{8,2}$) of the orthodrome (20) to its second-closest neighbouring point ($P_3$) in relation to the ball radius (R) is 0.87 $\pm$ 20%, preferably $\pm$ 10%, in particular $\pm$ 50, and
- the length ($Z_{8,3}$) of the orthodrome (20) to its third-closest neighbouring point ($P_{11}$) in relation to the ball radius (R) is 0.89 $\pm$ 20%, preferably $\pm$ 10%, in particular $\pm$ 50,

- wherein starting from a ninth marking point ($P_9$)

- the length ($Z_{9,1}$) of the orthodrome (20) to its closest neighbouring point ($P_{14}$) in relation to the ball radius (R) is 0.51 $\pm$ 20%, preferably $\pm$ 10%, in particular + 5%,
- the length ($Z_{9,2}$) of the orthodrome (20) to its second-closest neighbouring point ($P_{18}$) in relation to the ball radius (R) is 0.91 $\pm$ 20%, preferably $\pm$ 10%, in particular $\pm$ 50, and
- the length ($Z_{9,3}$) of the orthodrome (20) to its third-closest neighbouring point ($P_8$) in relation to the ball radius (R) is 0.95 $\pm$ 20%, preferably $\pm$ 10%, in particular $\pm$ 50,

- wherein starting from a tenth marking point ($P_{10}$)

- the length ($Z_{10,1}$) of the orthodrome (20) to its closest neighbouring point ($P_{13}$) in relation to the ball radius (R) is 0.75 $\pm$ 20%, preferably $\pm$ 10%, in particular $\pm$ 5%,
- the length ($Z_{10,2}$) of the orthodrome (20) to its second-closest neighbouring point ($P_{17}$) in relation to the ball radius (R) is 0.75 $\pm$ 20%, preferably $\pm$ 10%, in particular $\pm$ 50, and
- the length ($Z_{10,3}$) of the orthodrome (20) to its third-closest neighbouring point ($P_3$) in relation to the ball radius (R) is 0.78 $\pm$ 20%, preferably $\pm$ 10%, in particular $\pm$ 50,

- wherein starting from an eleventh marking point ($P_{11}$)

- the length ($Z_{11,1}$) of the orthodrome (20) to its closest neighbouring point ($P_{13}$) in relation to the ball radius (R) is 0.82 $\pm$ 20%, preferably $\pm$ 10%, in particular $\pm$ 5%,
- the length ($Z_{11,2}$) of the orthodrome (20) to its second-closest neighbouring point ($P_{10}$) in relation to the ball radius (R) is 0.88 $\pm$ 20%, preferably $\pm$ 10%, in particular $\pm$ 50, and
- the length ($Z_{11,3}$) of the orthodrome (20) to its third-closest neighbouring point ($P_8$) in relation to the ball radius (R) is 0.89 $\pm$ 20%, preferably $\pm$ 10%, in particular $\pm$ 5%,

- wherein starting from a twelfth marking point ($P_{12}$)

- the length ($Z_{12,1}$) of the orthodrome (20) to its closest neighbouring point ($P_6$) in relation to the ball radius (R) is 0.67 $\pm$ 20%, preferably $\pm$ 10%, in particular $\pm$ 5%,
- the length ($Z_{12,2}$) of the orthodrome (20) to its second-closest neighbouring point ($P_5$) in relation to the ball radius (R) is 0.79 $\pm$ 20%, preferably $\pm$ 10%, in particular $\pm$ 5%, and
- the length ($Z_{12,3}$) of the orthodrome (20) to its third-closest neighbouring point ($P_4$) in relation to the ball radius (R) is 0.84 $\pm$ 20%, preferably $\pm$ 10%, in particular $\pm$ 5%,

- wherein starting from a thirteenth marking point ($P_{13}$)

- the length ($Z_{13,1}$) of the orthodrome (20) to its closest neighbouring point ($P_{10}$) in relation to the ball radius (R) is 0.75 $\pm$ 20%, preferably $\pm$ 10%, in particular $\pm$ 5%,
- the length ($Z_{13,2}$) of the orthodrome (20) to its second-closest neighbouring point ($P_{11}$) in relation to the ball radius (R) is 0.82 $\pm$ 20%, preferably $\pm$ 10%, in particular $\pm$ 5%, and
- the length ($Z_{13,3}$) of the orthodrome (20) to its third-closest neighbouring point ($P_1$) in relation to the ball radius (R) is 1.02 $\pm$ 20%, preferably $\pm$ 10%, in particular $\pm$ 5%,

- wherein starting from a fourteenth marking point ($P_{14}$)

- the length ($Z_{14,1}$) of the orthodrome (20) to its closest neighbouring point ($P_9$) in relation to the ball radius (R) is 0.51 $\pm$ 20%, preferably $\pm$ 10%, in particular $\pm$ 5%,

- the length ($Z_{14,2}$) of the orthodrome (20) to its second-closest neighbouring point ($P_4$) in relation to the ball radius (R) is 0.92 $\pm$ 20%, preferably $\pm$ 10%, in particular $\pm$ 5%, and
- the length ($Z_{14,3}$) of the orthodrome (20) to its third-closest neighbouring point ($P_{11}$) in relation to the ball radius (R) is 0.98 $\pm$ 20%, preferably $\pm$ 10%, in particular $\pm$ 5%,

- wherein starting from a fifteenth marking point ($P_{15}$)

- the length ($Z_{15,1}$) of the orthodrome (20) to its closest neighbouring point ($P_8$) in relation to the ball radius (R) is 0.82 $\pm$ 20%, preferably $\pm$ 10%, in particular + 5% $\pm$ 10%, in particular $\pm$ 5%,
- the length ($Z_{15,2}$) of the orthodrome (20) to its second-closest neighbouring point ($P_3$) in relation to the ball radius (R) is 0.84 $\pm$ 20%, preferably $\pm$ 10%, in particular $\pm$ 5%, and
- the length ($Z_{15,3}$) of the orthodrome (20) to its third-closest neighbouring point ($P_7$) in relation to the ball radius (R) is 0.90 $\pm$ 20%, preferably $\pm$ 10%, in particular $\pm$ 5%,

- wherein starting from a sixteenth marking point ($P_{16}$)

- the length ($Z_{16,1}$) of the orthodrome (20) to its closest neighbouring point ($P_7$) in relation to the ball radius (R) is 0.59 $\pm$ 20%, preferably $\pm$ 10%, in particular + 5%,
- the length ($Z_{16,2}$) of the orthodrome (20) to its second-closest neighbouring point ($P_{17}$) in relation to the ball radius (R) is 0.74 $\pm$ 20%, preferably $\pm$ 10%, in particular $\pm$ 5%, and
- the length ($Z_{16,3}$) of the orthodrome (20) to its third-closest neighbouring point ($P_5$) in relation to the ball radius (R) is 1.10 $\pm$ 20%, preferably $\pm$ 10%, in particular $\pm$ 5%,

- wherein starting from a seventeenth marking point ($P_{17}$)

- the length ($Z_{17,1}$) of the orthodrome (20) to its closest neighbouring point ($P_{16}$) in relation to the ball radius (R) is 0.74 $\pm$ 20%, preferably $\pm$ 10%, in particular + 5%,
- the length ($Z_{17,2}$) of the orthodrome (20) to its second-closest neighbouring point ($P_{10}$) in relation to the ball radius (R) is 0.75 $\pm$ 20%, preferably $\pm$ 10%, in particular $\pm$ 5%, and
- the length ($Z_{17,3}$) of the orthodrome (20) to its third-closest neighbouring point ($P_7$) in relation to the ball radius (R) is 0.76 $\pm$ 20%, preferably $\pm$ 10%, in particular $\pm$ 5%, and

- wherein starting from an eighteenth marking point ($P_{18}$)

- the length ($Z_{18,1}$) of the orthodrome (20) to its closest neighbouring point ($P_6$) in relation to the ball radius (R) is 0.73 $\pm$ 20%, preferably $\pm$ 10%, in particular + 5%,
- the length ($Z_{18,2}$) of the orthodrome (20) to its second-closest neighbouring point ($P_{12}$) in relation to the ball radius (R) is 0.88 $\pm$ 20%, preferably $\pm$ 10%, in particular $\pm$ 5%, and
- the length ($Z_{18,3}$) of the orthodrome (20) to its third-closest neighbouring point ($P_9$) in relation to the ball radius (R) is 0.91 $\pm$ 20%, preferably $\pm$ 10%, in particular $\pm$ 5%.

13. Table tennis ball (2) according to Claim 12,

- wherein for the first marking point ($P_1$)

- the length ($Q_{1,1}$) of the orthodrome (20) between the closest neighbouring point ($P_2$) and the second-closest neighbouring point ($P_5$) in relation to the ball radius (R) is 0.83 $\pm$ 20%, preferably $\pm$ 10%, in particular + 5%,
- the length ($Q_{1,2}$) of the orthodrome (20) between the second-closest neighbouring point ($P_5$) and its third-closest neighbouring point ($P_{17}$) in relation to the ball radius (R) is 1.57 $\pm$ 20%, preferably $\pm$ 10%, in particular + 5%, and
- the length ($Q_{1,3}$) of the orthodrome (20) between the third-closest neighbouring point ($P_{17}$) and its closest neighbouring point ($P_2$) in relation to the ball radius (R) is 1.53 $\pm$ 20%, preferably $\pm$ 10%, in particular $\pm$ 5%,

- wherein for the second marking point ($P_2$)

- the length ($Q_{2,1}$) of the orthodrome (20) between the closest neighbouring point ($P_1$) and the second-closest neighbouring point ($P_4$) in relation to the ball radius (R) is 1.24 $\pm$ 20%, preferably $\pm$ 10%, in particular

+ 5%,
- the length ($Q_{2,2}$) of the orthodrome (20) between the second-closest neighbouring point ($P_4$) and its third-closest neighbouring point ($P_5$) in relation to the ball radius (R) is 0.85 ± 20%, preferably ± 10%, in particular + 5%, and
- the length ($Q_{2,3}$) of the orthodrome (20) between the third-closest neighbouring point ($P_5$) and its closest neighbouring point ($P_1$) in relation to the ball radius (R) is 0.91 ± 20%, preferably ± 10%, in particular ± 5%,

- wherein for the third marking point ($P_3$)

- the length ($Q_{3,1}$) of the orthodrome (20) between the closest neighbouring point ($P_{10}$) and the second-closest neighbouring point ($P_{15}$) in relation to the ball radius (R) is 1.61 ± 20%, preferably ± 10%, in particular ± 5%,
- the length ($Q_{3,2}$) of the orthodrome (20) between the second-closest neighbouring point ($P_{15}$) and its third-closest neighbouring point ($P_8$) in relation to the ball radius (R) is 0.82 ± 20%, preferably ± 10%, in particular + 5%, and
- the length ($Q_{3,3}$) of the orthodrome (20) between the third-closest neighbouring point ($P_8$) and its closest neighbouring point ($P_{10}$) in relation to the ball radius (R) is 1.45 ± 20%, preferably ± 10%, in particular ± 5%,

- wherein for the fourth marking point ($P_4$)

- the length ($Q_{4,1}$) of the orthodrome (20) between the closest neighbouring point ($P_2$) and the second-closest neighbouring point ($P_{12}$) in relation to the ball radius (R) is 1.39 ± 20%, preferably ± 10%, in particular + 5%,
- the length ($Q_{4,2}$) of the orthodrome (20) between the second-closest neighbouring point ($P_{12}$) and its third-closest neighbouring point ($P_5$) in relation to the ball radius (R) is 0.79 ± 20%, preferably ± 10%, in particular + 5%, and
- the length ($Q_{4,3}$) of the orthodrome (20) between the third-closest neighbouring point ($P_5$) and its closest neighbouring point ($P_2$) in relation to the ball radius (R) is 0.83 ± 20%, preferably ± 10%, in particular ± 5%,

- wherein for the fifth marking point ($P_5$)

- the length ($Q_{5,1}$) of the orthodrome (20) between the closest neighbouring point ($P_{12}$) and the second-closest neighbouring point ($P_2$) in relation to the ball radius (R) is 1.39 ± 20%, preferably ± 10%, in particular ± 5%,
- the length ($Q_{5,2}$) of the orthodrome (20) between the second-closest neighbouring point ($P_2$) and its third-closest neighbouring point ($P_4$) in relation to the ball radius (R) is 0.72 ± 20%, preferably ± 10%, in particular + 5%, and
- the length ($Q_{5,3}$) of the orthodrome (20) between the third-closest neighbouring point ($P_4$) and its closest neighbouring point ($P_{12}$) in relation to the ball radius (R) is 0.84 ± 20%, preferably ± 10%, in particular ± 5%,

- wherein for the sixth marking point ($P_6$)

- the length ($Q_{6,1}$) of the orthodrome (20) between the closest neighbouring point ($P_{12}$) and the second-closest neighbouring point ($P_{18}$) in relation to the ball radius (R) is 0.88 ± 20%, preferably ± 10%, in particular + 5%,
- the length ($Q_{6,2}$) of the orthodrome (20) between the second-closest neighbouring point ($P_{18}$) and its third-closest neighbouring point ($P_{15}$) in relation to the ball radius (R) is 0.97 ± 20%, preferably ± 10%, in particular + 5%, and
- the length ($Q_{6,3}$) of the orthodrome (20) between the third-closest neighbouring point ($P_{15}$) and its closest neighbouring point ($P_{12}$) in relation to the ball radius (R) is 1.57 ± 20%, preferably ± 10%, in particular ± 5%,

- wherein for the seventh marking point ($P_7$)

- the length ($Q_{7,1}$) of the orthodrome (20) between the closest neighbouring point ($P_{16}$) and the second-closest neighbouring point ($P_{17}$) in relation to the ball radius (R) is 0.74 ± 20%, preferably ± 10%, in particular + 5%,
- the length ($Q_{7,2}$) of the orthodrome (20) between the second-closest neighbouring point ($P_{17}$) and its third-closest neighbouring point ($P_{15}$) in relation to the ball radius (R) is 1.60 ± 20%, preferably ± 10%, in particular + 5%, and
- the length ($Q_{7,3}$) of the orthodrome (20) between the third-closest neighbouring point ($P_{15}$) and its closest neighbouring point ($P_{16}$) in relation to the ball radius (R) is 1.38 $\pm$ 20%, preferably $\pm$ 10%, in particular $\pm$ 5%,

- wherein for the eighth marking point ($P_8$)

- the length ($Q_{8,1}$) of the orthodrome (20) between the closest neighbouring point ($P_{15}$) and the second-closest neighbouring point ($P_3$) in relation to the ball radius (R) is 0.84 $\pm$ 20%, preferably $\pm$ 10%, in particular $\pm$ 5%,
- the length ($Q_{8,2}$) of the orthodrome (20) between the second-closest neighbouring point ($P_3$) and its third-closest neighbouring point ($P_{11}$) in relation to the ball radius (R) is 1.00 $\pm$ 20%, preferably $\pm$ 10%, in particular + 5%, and
- the length ($Q_{8,3}$) of the orthodrome (20) between the third-closest neighbouring point ($P_{11}$) and its closest neighbouring point ($P_{15}$) in relation to the ball radius (R) is 1.59 $\pm$ 20%, preferably $\pm$ 10%, in particular $\pm$ 5%,

- wherein for the ninth marking point ($P_9$)

- the length ($Q_{9,1}$) of the orthodrome (20) between the closest neighbouring point ($P_{14}$) and the second-closest neighbouring point ($P_{18}$) in relation to the ball radius (R) is 1.39 $\pm$ 20%, preferably $\pm$ 10%, in particular + 5%,
- the length ($Q_{9,2}$) of the orthodrome (20) between the second-closest neighbouring point ($P_{18}$) and its third-closest neighbouring point ($P_8$) in relation to the ball radius (R) is 0.96 $\pm$ 20%, preferably $\pm$ 10%, in particular + 5%, and
- the length ($Q_{9,3}$) of the orthodrome (20) between the third-closest neighbouring point ($P_8$) and its closest neighbouring point ($P_{14}$) in relation to the ball radius (R) is 1.33 $\pm$ 20%, preferably $\pm$ 10%, in particular $\pm$ 5%,

- wherein for the tenth marking point ($P_{10}$)

- the length ($Q_{10,1}$) of the orthodrome (20) between the closest neighbouring point ($P_{13}$) and the second-closest neighbouring point ($P_{17}$) in relation to the ball radius (R) is 1.22 $\pm$ 20%, preferably $\pm$ 10%, in particular $\pm$ 5%,
- the length ($Q_{10,2}$) of the orthodrome (20) between the second-closest neighbouring point ($P_{17}$) and its third-closest neighbouring point ($P_3$) in relation to the ball radius (R) is 1.11 $\pm$ 20%, preferably $\pm$ 10%, in particular + 5%, and
- the length ($Q_{10,3}$) of the orthodrome (20) between the third-closest neighbouring point ($P_3$) and its closest neighbouring point ($P_{13}$) in relation to the ball radius (R) is 1.45 $\pm$ 20%, preferably $\pm$ 10%, in particular $\pm$ 5%,

- wherein for the eleventh marking point ($P_{11}$)

- the length ($Q_{11,1}$) of the orthodrome (20) between the closest neighbouring point ($P_{13}$) and the second-closest neighbouring point ($P_{10}$) in relation to the ball radius (R) is 0.75 $\pm$ 20%, preferably $\pm$ 10%, in particular + 5%,
- the length ($Q_{11,2}$) of the orthodrome (20) between the second-closest neighbouring point ($P_{10}$) and its third-closest neighbouring point ($P_8$) in relation to the ball radius (R) is 1.45 $\pm$ 20%, preferably $\pm$ 10%, in particular + 5%, and
- the length ($Q_{11,3}$) of the orthodrome (20) between the third-closest neighbouring point ($P_8$) and its closest neighbouring point ($P_{13}$) in relation to the ball radius (R) is 1.71 $\pm$ 20%, preferably $\pm$ 10%, in particular $\pm$ 5%,

- wherein for the twelfth marking point ($P_{12}$)

- the length ($Q_{12,1}$) of the orthodrome (20) between the closest neighbouring point ($P_6$) and the second-closest neighbouring point ($P_5$) in relation to the ball radius (R) is 1.21 $\pm$ 20%, preferably $\pm$ 10%, in particular + 5%,
- the length ($Q_{12,2}$) of the orthodrome (20) between the second-closest neighbouring point ($P_5$) and its third-closest neighbouring point ($P_4$) in relation to the ball radius (R) is 0.85 $\pm$ 20%, preferably $\pm$ 10%, in particular + 5%, and
- the length ($Q_{12,3}$) of the orthodrome (20) between the third-closest neighbouring point ($P_4$) and its closest neighbouring point ($P_6$) in relation to the ball radius (R) is 1.51 $\pm$ 20%, preferably $\pm$ 10%, in particular $\pm$ 5%,

- wherein for the thirteenth marking point ($P_{13}$)

    - the length ($Q_{13,1}$) of the orthodrome (20) between the closest neighbouring point ($P_{10}$) and the second-closest neighbouring point ($P_{11}$) in relation to the ball radius (R) is 0.88 ± 20%, preferably ± 10%, in particular ± 5%,

    - the length ($Q_{13,2}$) of the orthodrome (20) between the second-closest neighbouring point ($P_{11}$) and its third-closest neighbouring point ($P_1$) in relation to the ball radius (R) is 1.84 ± 20%, preferably ± 10%, in particular + 5%, and

    - the length ($Q_{13,3}$) of the orthodrome (20) between the third-closest neighbouring point ($P_1$) and its closest neighbouring point ($P_{10}$) in relation to the ball radius (R) is 1.33 ± 20%, preferably ± 10%, in particular ± 5%,

- wherein for the fourteenth marking point ($P_{14}$)

    - the length ($Q_{14,1}$) of the orthodrome (20) between the closest neighbouring point ($P_9$) and the second-closest neighbouring point ($P_4$) in relation to the ball radius (R) is 1.12 ± 20%, preferably ± 10%, in particular + 5%,

    - the length ($Q_{14,2}$) of the orthodrome (20) between the second-closest neighbouring point ($P_4$) and its third-closest neighbouring point ($P_{11}$) in relation to the ball radius (R) is 1.88 ± 20%, preferably ± 10%, in particular + 5%, and

    - the length ($Q_{14,3}$) of the orthodrome (20) between the third-closest neighbouring point ($P_{11}$) and its closest neighbouring point ($P_9$) in relation to the ball radius (R) is 1.05 ± 20%, preferably ± 10%, in particular ± 5%,

- wherein for the fifteenth marking point ($P_{15}$)

    - the length ($Q_{15,1}$) of the orthodrome (20) between the closest neighbouring point ($P_8$) and the second-closest neighbouring point ($P_3$) in relation to the ball radius (R) is 0.87 ± 20%, preferably ± 10%, in particular ± 5%,

    - the length ($Q_{15,2}$) of the orthodrome (20) between the second-closest neighbouring point ($P_3$) and its third-closest neighbouring point ($P_7$) in relation to the ball radius (R) is 0.90 ± 20%, preferably ± 10%, in particular + 5%, and

    - the length ($Q_{15,3}$) of the orthodrome (20) between the third-closest neighbouring point ($P_7$) and its closest neighbouring point ($P_8$) in relation to the ball radius (R) is 1.58 ± 20%, preferably ± 10%, in particular ± 5%,

- wherein for the sixteenth marking point ($P_{16}$)

    - the length ($Q_{16,1}$) of the orthodrome (20) between the closest neighbouring point ($P_7$) and the second-closest neighbouring point ($P_{17}$) in relation to the ball radius (R) is 0.76 ± 20%, preferably ± 10%, in particular + 5%,

    - the length ($Q_{16,2}$) of the orthodrome (20) between the second-closest neighbouring point ($P_{17}$) and its third-closest neighbouring point ($P_5$) in relation to the ball radius (R) is 1.57 ± 20%, preferably ± 10%, in particular + 5%, and

    - the length ($Q_{16,3}$) of the orthodrome (20) between the third-closest neighbouring point ($P_5$) and its closest neighbouring point ($P_7$) in relation to the ball radius (R) is 1.67 ± 20%, preferably ± 10%, in particular ± 5%,

- wherein for the seventeenth marking point ($P_{17}$)

    - the length ($Q_{17,1}$) of the orthodrome (20) between the closest neighbouring point ($P_{16}$) and the second-closest neighbouring point ($P_{10}$) in relation to the ball radius (R) is 1.47 ± 20%, preferably ± 10%, in particular + 5%,

    - the length ($Q_{17,2}$) of the orthodrome (20) between the second-closest neighbouring point ($P_{10}$) and its third-closest neighbouring point ($P_7$) in relation to the ball radius (R) is 1.21 ± 20%, preferably ± 10%, in particular + 5%, and

    - the length ($Q_{17,3}$) of the orthodrome (20) between the third-closest neighbouring point ($P_7$) and its closest neighbouring point ($P_{16}$) in relation to the ball radius (R) is 0.59 ± 20%, preferably ± 10%, in particular ± 5%, and

- wherein for the eighteenth marking point ($P_{18}$)

- the length ($Q_{18,1}$) of the orthodrome (20) between the closest neighbouring point ($P_6$) and the second-closest neighbouring point ($P_{12}$) in relation to the ball radius (R) is 0.67 $\pm$ 20%, preferably $\pm$ 10%, in particular + 5%,
- the length ($Q_{18,2}$) of the orthodrome (20) between the second-closest neighbouring point ($P_{12}$) and its third-closest neighbouring point ($P_9$) in relation to the ball radius (R) is 1.37 $\pm$ 20%, preferably $\pm$ 10%, in particular + 5%, and
- the length ($Q_{18,3}$) of the orthodrome (20) between the third-closest neighbouring point ($P_9$) and its closest neighbouring point ($P_6$) in relation to the ball radius (R) is 1.62 $\pm$ 20%, preferably $\pm$ 10%, in particular $\pm$ 5%.

**Revendications**

1. Balle de tennis de table (2) ayant une surface de balle (6) sphérique et un marquage (8) appliqué sur la surface de balle (6) servant à rendre possible l'acquisition métrologique d'une rotation de la balle, le marquage (8) comportant un nombre (N) de points de marquage ($P_i$),
   **caractérisée en ce que**
   les points de marquage ($P_i$) sont distribués sur la surface de balle (6) de telle sorte

   - l'écart type des longueurs ($Z_{i,j}$) des orthodromies (20) entre chacun des points de marquage ($P_i$) et ses trois points voisins (14, 16, 18) les plus proches est au moins égal à 12 % de la valeur moyenne ($\mu$) de ces longueurs ($Z_{i,j}$) et
   - la longueur minimale des orthodromies (20) entre chacun des points de marquage ($P_i$) et ses trois points voisins (14, 16, 18) les plus proches est au moins égale à 40 % de la valeur moyenne ($\mu$) de ces longueurs ($Z_{i,j}$) et/ou au moins égale à 120 % du quotient du rayon de la balle (R) par la racine carrée du nombre (N) de points de marquage ($P_i$).

2. Balle de tennis de table (2) selon la revendication 1, les points de marquage ($P_i$) étant distribués sur la surface de balle (6) de telle sorte que l'écart type des longueurs ($Z_{i,j}$) des orthodromies (20) entre chacun des points de marquage ($P_i$) et ses trois points voisins (14, 16, 18) les plus proches est au moins égal à 15 % de la valeur moyenne ($\mu$) de ces longueurs ($Z_{i,j}$).

3. Balle de tennis de table (2) selon la revendication 1 ou 2,
   la longueur minimale des orthodromies (20) entre chacun des points de marquage ($P_i$) et ses trois points voisins (14, 16, 18) les plus proches étant au moins égale à 50 %, notamment au moins égale à 60 % de la valeur moyenne ($\mu$) de ces longueurs ($Z_{i,j}$).

4. Balle de tennis de table (2) selon l'une des revendications 1 à 3,
   la longueur minimale des orthodromies (20) entre chacun des points de marquage ($P_i$) et ses trois points voisins (14, 16, 18) les plus proches étant au moins égale à 150 %, notamment au moins égale à 180 % du quotient du rayon de la balle (R) par la racine carrée du nombre de points (N).

5. Balle de tennis de table (2), notamment selon l'une des revendications 1 à 4, ayant une surface de balle (6) sphérique et un marquage (8) appliqué sur la surface de balle (6) servant à rendre possible l'acquisition métrologique d'une rotation de la balle, le marquage (8) comportant un certain nombre de points de marquage ($P_i$), les points de marquage ($P_i$) étant distribués sur la surface de balle (6) de telle sorte que l'envergure ($\Delta Q_i$) des longueurs ($Q_{i,k}$) des orthodromies (20) qui relient les trois points voisins (14, 16, 18) les plus proches de chaque point de marquage ($P_i$) entre eux est supérieure à 30 %, de préférence supérieure à 35 %, et notamment supérieure à 40 % de la valeur moyenne ($\mu$) des longueurs ($Z_{i,j}$) des orthodromies (20) entre chacun des points de marquage ($P_i$) et ses trois points voisins (14, 16, 18) les plus proches.

6. Balle de tennis de table (2) selon l'une des revendications 1 à 5, le nombre de points de marquage ($P_i$) étant compris entre 13 et 25, de préférence entre 16 et 21, et notamment de l'ordre de 18 ou 19.

7. Balle de tennis de table (2) selon l'une des revendications 1 à 6,
   le diamètre (d) de chaque point de marquage ($P_i$) étant compris entre 10 % et 24 %, de préférence entre 15 % et 20 % et notamment de 17,5 % du rayon de la balle (R).

8. Balle de tennis de table (2) selon l'une des revendications 1 à 7,

le diamètre (2) de chaque point de marquage ($P_i$) étant compris entre 2,0 mm et 4,8mm, de préférence entre 3,0 mm et 4,0 mm et notamment de 3,5 mm.

9. Balle de tennis de table (2) selon l'une des revendications 1 à 8, tous les points de marquage ($P_i$) ayant la même forme et la même taille.

10. Balle de tennis de table (2) selon l'une des revendications 1 à 9, les points de marquage ($P_i$) présentant une caractéristique d'absorption des infrarouges et/ou de réémission des infrarouges différente du reste de la surface de balle (6), de sorte que les points de marquage ($P_i$) ressortent par contraste du reste de la surface de balle (6) dans la plage infrarouge du spectre de rayonnement électromagnétique, notamment dans une image infrarouge de la balle de tennis de table (2).

11. Balle de tennis de table (2) selon l'une des revendications 1 à 10, les points de marquage ($P_i$) présentant une couleur différente du reste de la surface de balle (6), de sorte que les points de marquage ($P_i$) ressortent par contraste du reste de la surface de balle (6) dans la plage visible du spectre de rayonnement électromagnétique, notamment dans une photographie filtrée par couleur de la balle de tennis de table (2).

12. Balle de tennis de table (2), notamment selon l'une des revendications 1 à 11, ayant une surface de balle (6) sphérique et un marquage (8) appliqué sur la surface de balle (6) servant à rendre possible l'acquisition métrologique d'une rotation de la balle, le marquage (8) comportant un certain nombre de points de marquage ($P_i$),

- le marquage (8) comportant dix-huit points de marquage ($P_i$),
- en partant d'un premier point de marquage ($P_i$),

* la longueur ($Z_{1,1}$) de l'orthodromie (20) vers son point voisin ($P_2$) le plus proche par rapport au rayon de la balle (R) étant de 0,54 ± 20 %, de préférence de ± 10 %, notamment de ± 5 %,
* la longueur ($Z_{1,2}$) de l'orthodromie (20) vers son deuxième point voisin ($P_5$) le plus proche par rapport au rayon de la balle (R) étant de 0,91 ± 20 %, de préférence de ± 10 %, notamment de ± 5 %, et
* la longueur ($Z_{1,3}$) de l'orthodromie (20) vers son troisième point voisin ($P_{17}$) le plus proche par rapport au rayon de la balle (R) étant de 0,99 ± 20 %, de préférence de ± 10 %, notamment de ± 5 %,

- en partant d'un deuxième point de marquage ($P_2$),

* la longueur ($Z_{2,1}$) de l'orthodromie (20) vers son point voisin ($P_1$) le plus proche par rapport au rayon de la balle (R) étant de 0,54 ± 20 %, de préférence de ± 10 %, notamment de ± 5 %,
* la longueur ($Z_{2,2}$) de l'orthodromie (20) vers son deuxième point voisin ($P_4$) le plus proche par rapport au rayon de la balle (R) étant de 0,72 ± 20 %, de préférence de ± 10 %, notamment de ± 5 %, et
* la longueur ($Z_{2,3}$) de l'orthodromie (20) vers son troisième point voisin ($P_5$) le plus proche par rapport au rayon de la balle (R) étant de 0,83 ± 20 %, de préférence de ± 10 %, notamment de ± 5 %,

- en partant d'un troisième point de marquage ($P_3$),

* la longueur ($Z_{3,1}$) de l'orthodromie (20) vers son point voisin ($P_{10}$) le plus proche par rapport au rayon de la balle (R) étant de 0,78 ± 20 %, de préférence de ± 10 %, notamment de ± 5 %,
* la longueur ($Z_{3,2}$) de l'orthodromie (20) vers son deuxième point voisin ($P_{15}$) le plus proche par rapport au rayon de la balle (R) étant de 0,84 ± 20 %, de préférence de ± 10 %, notamment de ± 5 %, et
* la longueur ($Z_{3,3}$) de l'orthodromie (20) vers son troisième point voisin ($P_8$) le plus proche par rapport au rayon de la balle (R) étant de 0,87 ± 20 %, de préférence de ± 10 %, notamment de ± 5 %,

- en partant d'un quatrième point de marquage ($P_4$),

* la longueur ($Z_{4,1}$) de l'orthodromie (20) vers son point voisin ($P_2$) le plus proche par rapport au rayon de la balle (R) étant de 0,72 ± 20 %, de préférence de ± 10 %, notamment de ± 5 %,
* la longueur ($Z_{4,2}$) de l'orthodromie (20) vers son deuxième point voisin ($P_{12}$) le plus proche par rapport au rayon de la balle (R) étant de 0,84 ± 20 %, de préférence de ± 10 %, notamment de ± 5 %, et
* la longueur ($Z_{4,3}$) de l'orthodromie (20) vers son troisième point voisin ($P_5$) le plus proche par rapport au rayon de la balle (R) étant de 0,85 ± 20 %, de préférence de ± 10 %, notamment de ± 5 %,

- en partant d'un cinquième point de marquage ($P_5$),

    * la longueur ($Z_{5,1}$) de l'orthodromie (20) vers son point voisin ($P_{12}$) le plus proche par rapport au rayon de la balle (R) étant de 0,79 $\pm$ 20 %, de préférence de $\pm$ 10 %, notamment de $\pm$ 5 %,
    * la longueur ($Z_{5,2}$) de l'orthodromie (20) vers son deuxième point voisin ($P_2$) le plus proche par rapport au rayon de la balle (R) étant de 0,83 $\pm$ 20 %, de préférence de $\pm$ 10 %, notamment de $\pm$ 5 %, et
    * la longueur ($Z_{5,3}$) de l'orthodromie (20) vers son troisième point voisin ($P_4$) le plus proche par rapport au rayon de la balle (R) étant de 0,85 $\pm$ 20 %, de préférence de $\pm$ 10 %, notamment de $\pm$ 5 %,

- en partant d'un sixième point de marquage ($P_6$),

    * la longueur ($Z_{6,1}$) de l'orthodromie (20) vers son point voisin ($P_{12}$) le plus proche par rapport au rayon de la balle (R) étant de 0,67 $\pm$ 20 %, de préférence de $\pm$ 10 %, notamment de $\pm$ 5 %,
    * la longueur ($Z_{6,2}$) de l'orthodromie (20) vers son deuxième point voisin ($P_{18}$) le plus proche par rapport au rayon de la balle (R) étant de 0,73 $\pm$ 20 %, de préférence de $\pm$ 10 %, notamment de $\pm$ 5 %, et
    * la longueur ($Z_{6,3}$) de l'orthodromie (20) vers son troisième point voisin ($P_{15}$) le plus proche par rapport au rayon de la balle (R) étant de 0,94 $\pm$ 20 %, de préférence de $\pm$ 10 %, notamment de $\pm$ 5 %,

- en partant d'un septième point de marquage ($P_7$),

    * la longueur ($Z_{7,1}$) de l'orthodromie (20) vers son point voisin ($P_{16}$) le plus proche par rapport au rayon de la balle (R) étant de 0,59 $\pm$ 20 %, de préférence de $\pm$ 10 %, notamment de $\pm$ 5 %,
    * la longueur ($Z_{7,2}$) de l'orthodromie (20) vers son deuxième point voisin ($P_{17}$) le plus proche par rapport au rayon de la balle (R) étant de 0,76 $\pm$ 20 %, de préférence de $\pm$ 10 %, notamment de $\pm$ 5 %, et
    * la longueur ($Z_{7,3}$) de l'orthodromie (20) vers son troisième point voisin ($P_{15}$) le plus proche par rapport au rayon de la balle (R) étant de 0,90 $\pm$ 20 %, de préférence de $\pm$ 10 %, notamment de $\pm$ 5 %,

- en partant d'un huitième point de marquage ($P_8$),

    * la longueur ($Z_{8,1}$) de l'orthodromie (20) vers son point voisin ($P_{15}$) le plus proche par rapport au rayon de la balle (R) étant de 0,82 $\pm$ 20 %, de préférence de $\pm$ 10 %, notamment de $\pm$ 5 %,
    * la longueur ($Z_{8,2}$) de l'orthodromie (20) vers son deuxième point voisin ($P_3$) le plus proche par rapport au rayon de la balle (R) étant de 0,87 $\pm$ 20 %, de préférence de $\pm$ 10 %, notamment de $\pm$ 5 %, et
    * la longueur ($Z_{8,3}$) de l'orthodromie (20) vers son troisième point voisin ($P_{11}$) le plus proche par rapport au rayon de la balle (R) étant de 0,89 $\pm$ 20 %, de préférence de $\pm$ 10 %, notamment de $\pm$ 5 %,

- en partant d'un neuvième point de marquage ($P_9$),

    * la longueur ($Z_{9,1}$) de l'orthodromie (20) vers son point voisin ($P_{14}$) le plus proche par rapport au rayon de la balle (R) étant de 0,51 $\pm$ 20 %, de préférence de $\pm$ 10 %, notamment de $\pm$ 5 %,
    * la longueur ($Z_{9,2}$) de l'orthodromie (20) vers son deuxième point voisin ($P_{18}$) le plus proche par rapport au rayon de la balle (R) étant de 0,91 $\pm$ 20 %, de préférence de $\pm$ 10 %, notamment de $\pm$ 5 %, et
    * la longueur ($Z_{9,3}$) de l'orthodromie (20) vers son troisième point voisin ($P_8$) le plus proche par rapport au rayon de la balle (R) étant de 0,95 $\pm$ 20 %, de préférence de $\pm$ 10 %, notamment de $\pm$ 5 %,

- en partant d'un dixième point de marquage ($P_{10}$),

    * la longueur ($Z_{10,1}$) de l'orthodromie (20) vers son point voisin ($P_{13}$) le plus proche par rapport au rayon de la balle (R) étant de 0,75 $\pm$ 20 %, de préférence de $\pm$ 10 %, notamment de $\pm$ 5 %,
    * la longueur ($Z_{10,2}$) de l'orthodromie (20) vers son deuxième point voisin ($P_{17}$) le plus proche par rapport au rayon de la balle (R) étant de 0,75 $\pm$ 20 %, de préférence de $\pm$ 10 %, notamment de $\pm$ 5 %, et
    * la longueur ($Z_{10,3}$) de l'orthodromie (20) vers son troisième point voisin ($P_3$) le plus proche par rapport au rayon de la balle (R) étant de 0,78 $\pm$ 20 %, de préférence de $\pm$ 10 %, notamment de $\pm$ 5 %,

- en partant d'un onzième point de marquage ($P_{11}$),

    * la longueur ($Z_{11,1}$) de l'orthodromie (20) vers son point voisin ($P_{13}$) le plus proche par rapport au rayon de la balle (R) étant de 0,82 $\pm$ 20 %, de préférence de $\pm$ 10 %, notamment de $\pm$ 5 %,

* la longueur ($Z_{11,2}$) de l'orthodromie (20) vers son deuxième point voisin ($P_{10}$) le plus proche par rapport au rayon de la balle (R) étant de 0,88 $\pm$ 20 %, de préférence de $\pm$ 10 %, notamment de $\pm$ 5 %, et
* la longueur ($Z_{11,3}$) de l'orthodromie (20) vers son troisième point voisin ($P_8$) le plus proche par rapport au rayon de la balle (R) étant de 0,89 $\pm$ 20 %, de préférence de $\pm$ 10 %, notamment de $\pm$ 5 %,

- en partant d'un douzième point de marquage ($P_{12}$),

* la longueur ($Z_{12,1}$) de l'orthodromie (20) vers son point voisin ($P_6$) le plus proche par rapport au rayon de la balle (R) étant de 0,67 $\pm$ 20 %, de préférence de $\pm$ 10 %, notamment de $\pm$ 5 %,
* la longueur ($Z_{12,2}$) de l'orthodromie (20) vers son deuxième point voisin ($P_5$) le plus proche par rapport au rayon de la balle (R) étant de 0,79 $\pm$ 20 %, de préférence de $\pm$ 10 %, notamment de $\pm$ 5 %, et
* la longueur ($Z_{12,3}$) de l'orthodromie (20) vers son troisième point voisin ($P_4$) le plus proche par rapport au rayon de la balle (R) étant de 0,84 $\pm$ 20 %, de préférence de $\pm$ 10 %, notamment de $\pm$ 5 %,

- en partant d'un treizième point de marquage ($P_{13}$),

* la longueur ($Z_{13,1}$) de l'orthodromie (20) vers son point voisin ($P_{10}$) le plus proche par rapport au rayon de la balle (R) étant de 0,75 $\pm$ 20 %, de préférence de $\pm$ 10 %, notamment de $\pm$ 5 %,
* la longueur ($Z_{13,2}$) de l'orthodromie (20) vers son deuxième point voisin ($P_{11}$) le plus proche par rapport au rayon de la balle (R) étant de 0,82 $\pm$ 20 %, de préférence de $\pm$ 10 %, notamment de $\pm$ 5 %, et
* la longueur ($Z_{13,3}$) de l'orthodromie (20) vers son troisième point voisin ($P_1$) le plus proche par rapport au rayon de la balle (R) étant de 1,02 $\pm$ 20 %, de préférence de $\pm$ 10 %, notamment de $\pm$ 5 %,

- en partant d'un quatorzième point de marquage ($P_{14}$),

* la longueur ($Z_{14,1}$) de l'orthodromie (20) vers son point voisin ($P_9$) le plus proche par rapport au rayon de la balle (R) étant de 0,51 $\pm$ 20 %, de préférence de $\pm$ 10 %, notamment de $\pm$ 5 %,
* la longueur ($Z_{14,2}$) de l'orthodromie (20) vers son deuxième point voisin ($P_4$) le plus proche par rapport au rayon de la balle (R) étant de 0,92 $\pm$ 20 %, de préférence de $\pm$ 10 %, notamment de $\pm$ 5 %, et
* la longueur ($Z_{14,3}$) de l'orthodromie (20) vers son troisième point voisin ($P_{11}$) le plus proche par rapport au rayon de la balle (R) étant de 0,98 $\pm$ 20 %, de préférence de $\pm$ 10 %, notamment de $\pm$ 5 %,

- en partant d'un quinzième point de marquage ($P_{15}$),

* la longueur ($Z_{15,1}$) de l'orthodromie (20) vers son point voisin ($P_8$) le plus proche par rapport au rayon de la balle (R) étant de 0,82 $\pm$ 20 %, de préférence de $\pm$ 10 %, notamment de $\pm$ 5 %,
* la longueur ($Z_{15,2}$) de l'orthodromie (20) vers son deuxième point voisin ($P_3$) le plus proche par rapport au rayon de la balle (R) étant de 0,84 $\pm$ 20 %, de préférence de $\pm$ 10 %, notamment de $\pm$ 5 %, et
* la longueur ($Z_{15,3}$) de l'orthodromie (20) vers son troisième point voisin ($P_7$) le plus proche par rapport au rayon de la balle (R) étant de 0,90 $\pm$ 20 %, de préférence de $\pm$ 10 %, notamment de $\pm$ 5 %,

- en partant d'un seizième point de marquage ($P_{16}$),

* la longueur ($Z_{16,1}$) de l'orthodromie (20) vers son point voisin ($P_7$) le plus proche par rapport au rayon de la balle (R) étant de 0,59 $\pm$ 20 %, de préférence de $\pm$ 10 %, notamment de $\pm$ 5 %,
* la longueur ($Z_{16,2}$) de l'orthodromie (20) vers son deuxième point voisin ($P_{17}$) le plus proche par rapport au rayon de la balle (R) étant de 0,74 $\pm$ 20 %, de préférence de $\pm$ 10 %, notamment de $\pm$ 5 %, et
* la longueur ($Z_{16,3}$) de l'orthodromie (20) vers son troisième point voisin ($P_5$) le plus proche par rapport au rayon de la balle (R) étant de 1,10 $\pm$ 20 %, de préférence de $\pm$ 10 %, notamment de $\pm$ 5 %,

- en partant d'un dix-septième point de marquage ($P_{17}$),

* la longueur ($Z_{17,1}$) de l'orthodromie (20) vers son point voisin ($P_{16}$) le plus proche par rapport au rayon de la balle (R) étant de 0,74 $\pm$ 20 %, de préférence de $\pm$ 10 %, notamment de $\pm$ 5 %,
* la longueur ($Z_{17,2}$) de l'orthodromie (20) vers son deuxième point voisin ($P_{10}$) le plus proche par rapport au rayon de la balle (R) étant de 0,75 $\pm$ 20 %, de préférence de $\pm$ 10 %, notamment de $\pm$ 5 %, et
* la longueur ($Z_{17,3}$) de l'orthodromie (20) vers son troisième point voisin ($P_7$) le plus proche par rapport au rayon de la balle (R) étant de 0,76 $\pm$ 20 %, de préférence de $\pm$ 10 %, notamment de $\pm$ 5 %, et

- en partant d'un dix-huitième point de marquage ($P_{18}$),

* la longueur ($Z_{18,1}$) de l'orthodromie (20) vers son point voisin ($P_6$) le plus proche par rapport au rayon de la balle (R) étant de 0,73 $\pm$ 20 %, de préférence de $\pm$ 10 %, notamment de $\pm$ 5 %,
* la longueur ($Z_{18,2}$) de l'orthodromie (20) vers son deuxième point voisin ($P_{12}$) le plus proche par rapport au rayon de la balle (R) étant de 0,88 $\pm$ 20 %, de préférence de $\pm$ 10 %, notamment de $\pm$ 5 %, et
* la longueur ($Z_{18,3}$) de l'orthodromie (20) vers son troisième point voisin ($P_9$) le plus proche par rapport au rayon de la balle (R) étant de 0,91 $\pm$ 20 %, de préférence de $\pm$ 10 %, notamment de $\pm$ 5 %.

**13.** Balle de tennis de table (2) selon la revendication 12,

- pour le premier point de marquage ($P_1$),

* la longueur ($Q_{1,1}$) de l'orthodromie (20) entre le point voisin ($P_2$) le plus proche et le deuxième point voisin ($P_5$) le plus proche par rapport au rayon de la balle (R) étant de 0,83 $\pm$ 20 %, de préférence de $\pm$ 10 %, notamment de $\pm$ 5 %,
* la longueur ($Q_{1,2}$) de l'orthodromie (20) entre le deuxième point voisin ($P_5$) le plus proche et son troisième point voisin ($P_{17}$) le plus proche par rapport au rayon de la balle (R) étant de 1,57 $\pm$ 20 %, de préférence de $\pm$ 10 %, notamment de $\pm$ 5 %, et
* la longueur ($Q_{1,3}$) de l'orthodromie (20) entre le troisième point voisin ($P_{17}$) le plus proche et son point voisin ($P_2$) le plus proche par rapport au rayon de la balle (R) étant de 1,53 $\pm$ 20 %, de préférence de $\pm$ 10 %, notamment de $\pm$ 5 %,

- pour le deuxième point de marquage ($P_2$),

* la longueur ($Q_{2,1}$) de l'orthodromie (20) entre le point voisin ($P_1$) le plus proche et le deuxième point voisin ($P_4$) le plus proche par rapport au rayon de la balle (R) étant de 1,24 $\pm$ 20 %, de préférence de $\pm$ 10 %, notamment de $\pm$ 5 %,
* la longueur ($Q_{2,2}$) de l'orthodromie (20) entre le deuxième point voisin ($P_4$) le plus proche et son troisième point voisin ($P_5$) le plus proche par rapport au rayon de la balle (R) étant de 0,85 $\pm$ 20 %, de préférence de $\pm$ 10 %, notamment de $\pm$ 5 %, et
* la longueur ($Q_{2,3}$) de l'orthodromie (20) entre le troisième point voisin ($P_5$) le plus proche et son point voisin ($P_1$) le plus proche par rapport au rayon de la balle (R) étant de 0,91 $\pm$ 20 %, de préférence de $\pm$ 10 %, notamment de $\pm$ 5 %,

- pour le troisième point de marquage ($P_3$),

* la longueur ($Q_{3,1}$) de l'orthodromie (20) entre le point voisin ($P_{10}$) le plus proche et le deuxième point voisin ($P_{15}$) le plus proche par rapport au rayon de la balle (R) étant de 1,61 $\pm$ 20 %, de préférence de $\pm$ 10 %, notamment de $\pm$ 5 %,
* la longueur ($Q_{3,2}$) de l'orthodromie (20) entre le deuxième point voisin ($P_{15}$) le plus proche et son troisième point voisin ($P_8$) le plus proche par rapport au rayon de la balle (R) étant de 0,82 $\pm$ 20 %, de préférence de $\pm$ 10 %, notamment de $\pm$ 5 %, et
* la longueur ($Q_{3,3}$) de l'orthodromie (20) entre le troisième point voisin ($P_8$) le plus proche et son point voisin ($P_{10}$) le plus proche par rapport au rayon de la balle (R) étant de 1,45 $\pm$ 20 %, de préférence de $\pm$ 10 %, notamment de $\pm$ 5 %,

- pour le quatrième point de marquage ($P_4$),

* la longueur ($Q_{4,1}$) de l'orthodromie (20) entre le point voisin ($P_2$) le plus proche et le deuxième point voisin ($P_{12}$) le plus proche par rapport au rayon de la balle (R) étant de 1,39 $\pm$ 20 %, de préférence de $\pm$ 10 %, notamment de $\pm$ 5 %,
* la longueur ($Q_{4,2}$) de l'orthodromie (20) entre le deuxième point voisin ($P_{12}$) le plus proche et son troisième point voisin ($P_5$) le plus proche par rapport au rayon de la balle (R) étant de 0,79 $\pm$ 20 %, de préférence de $\pm$ 10 %, notamment de $\pm$ 5 %, et
* la longueur ($Q_{4,3}$) de l'orthodromie (20) entre le troisième point voisin ($P_5$) le plus proche et son point voisin ($P_2$) le plus proche par rapport au rayon de la balle (R) étant de 0,83 $\pm$ 20 %, de préférence de $\pm$ 10 %, notamment de $\pm$ 5 %,

- pour le cinquième point de marquage (P_5),

* la longueur (Q_{5,1}) de l'orthodromie (20) entre le point voisin (P_{12}) le plus proche et le deuxième point voisin (P_2) le plus proche par rapport au rayon de la balle (R) étant de 1,39 ± 20 %, de préférence de ± 10 %, notamment de ± 5 %,
* la longueur (Q_{5,2}) de l'orthodromie (20) entre le deuxième point voisin (P_2) le plus proche et son troisième point voisin (P_4) le plus proche par rapport au rayon de la balle (R) étant de 0,72 ± 20 %, de préférence de ± 10 %, notamment de ± 5 %, et
* la longueur (Q_{5,3}) de l'orthodromie (20) entre le troisième point voisin (P_4) le plus proche et son point voisin (P_{12}) le plus proche par rapport au rayon de la balle (R) étant de 0,84 ± 20 %, de préférence de ± 10 %, notamment de ± 5 %,

- pour le sixième point de marquage (P_6),

* la longueur (Q_{6,1}) de l'orthodromie (20) entre le point voisin (P_{12}) le plus proche et le deuxième point voisin (P_{18}) le plus proche par rapport au rayon de la balle (R) étant de 0,88 ± 20 %, de préférence de ± 10 %, notamment de ± 5 %,
* la longueur (Q_{6,2}) de l'orthodromie (20) entre le deuxième point voisin (P_{18}) le plus proche et son troisième point voisin (P_{15}) le plus proche par rapport au rayon de la balle (R) étant de 0,97 ± 20 %, de préférence de ± 10 %, notamment de ± 5 %, et
* la longueur (Q_{6,3}) de l'orthodromie (20) entre le troisième point voisin (P_{15}) le plus proche et son point voisin (P_{12}) le plus proche par rapport au rayon de la balle (R) étant de 1,57 ± 20 %, de préférence de ± 10 %, notamment de ± 5 %,

- pour le septième point de marquage (P_7),

* la longueur (Q_{7,1}) de l'orthodromie (20) entre le point voisin (P_{16}) le plus proche et le deuxième point voisin (P_{17}) le plus proche par rapport au rayon de la balle (R) étant de 0,74 ± 20 %, de préférence de ± 10 %, notamment de ± 5 %,
* la longueur (Q_{7,2}) de l'orthodromie (20) entre le deuxième point voisin (P_{17}) le plus proche et son troisième point voisin (P_{15}) le plus proche par rapport au rayon de la balle (R) étant de 1,60 ± 20 %, de préférence de ± 10 %, notamment de ± 5 %, et
* la longueur (Q_{7,3}) de l'orthodromie (20) entre le troisième point voisin (P_{15}) le plus proche et son point voisin (P_{16}) le plus proche par rapport au rayon de la balle (R) étant de 1,38 ± 20 %, de préférence de ± 10 %, notamment de ± 5 %,

- pour le huitième point de marquage (P_8),

* la longueur (Q_{8,1}) de l'orthodromie (20) entre le point voisin (P_{15}) le plus proche et le deuxième point voisin (P_3) le plus proche par rapport au rayon de la balle (R) étant de 0,84 ± 20 %, de préférence de ± 10 %, notamment de ± 5 %,
* la longueur (Q_{8,2}) de l'orthodromie (20) entre le deuxième point voisin (P_3) le plus proche et son troisième point voisin (P_{11}) le plus proche par rapport au rayon de la balle (R) étant de 1,00 ± 20 %, de préférence de ± 10 %, notamment de ± 5 %, et
* la longueur (Q_{8,3}) de l'orthodromie (20) entre le troisième point voisin (P_{11}) le plus proche et son point voisin (P_{15}) le plus proche par rapport au rayon de la balle (R) étant de 1,59 ± 20 %, de préférence de ± 10 %, notamment de ± 5 %,

- pour le neuvième point de marquage (P_9),

* la longueur (Q_{9,1}) de l'orthodromie (20) entre le point voisin (P_{14}) le plus proche et le deuxième point voisin (P_{18}) le plus proche par rapport au rayon de la balle (R) étant de 1,39 ± 20 %, de préférence de ± 10 %, notamment de ± 5 %,
* la longueur (Q_{9,2}) de l'orthodromie (20) entre le deuxième point voisin (P_{18}) le plus proche et son troisième point voisin (P_8) le plus proche par rapport au rayon de la balle (R) étant de 0,96 ± 20 %, de préférence de ± 10 %, notamment de ± 5 %, et
* la longueur (Q_{9,3}) de l'orthodromie (20) entre le troisième point voisin (P_8) le plus proche et son point voisin (P_{14}) le plus proche par rapport au rayon de la balle (R) étant de 1,33 ± 20 %, de préférence de ±

10 %, notamment de $\pm$ 5 %,

- pour le dixième point de marquage ($P_{10}$),

* la longueur ($Q_{10,1}$) de l'orthodromie (20) entre le point voisin ($P_{13}$) le plus proche et le deuxième point voisin ($P_{17}$) le plus proche par rapport au rayon de la balle (R) étant de 1,22 $\pm$ 20 %, de préférence de $\pm$ 10 %, notamment de $\pm$ 5 %,
* la longueur ($Q_{10,2}$) de l'orthodromie (20) entre le deuxième point voisin ($P_{17}$) le plus proche et son troisième point voisin ($P_3$) le plus proche par rapport au rayon de la balle (R) étant de 1,11 $\pm$ 20 %, de préférence de $\pm$ 10 %, notamment de $\pm$ 5 %, et
* la longueur ($Q_{10,3}$) de l'orthodromie (20) entre le troisième point voisin ($P_3$) le plus proche et son point voisin ($P_{13}$) le plus proche par rapport au rayon de la balle (R) étant de 1,45 $\pm$ 20 %, de préférence de $\pm$ 10 %, notamment de $\pm$ 5 %,

- pour le onzième point de marquage ($P_{11}$),

* la longueur ($Q_{11,1}$) de l'orthodromie (20) entre le point voisin ($P_{13}$) le plus proche et le deuxième point voisin ($P_{10}$) le plus proche par rapport au rayon de la balle (R) étant de 0,75 $\pm$ 20 %, de préférence de $\pm$ 10 %, notamment de $\pm$ 5 %,
* la longueur ($Q_{11,2}$) de l'orthodromie (20) entre le deuxième point voisin ($P_{10}$) le plus proche et son troisième point voisin ($P_8$) le plus proche par rapport au rayon de la balle (R) étant de 1,45 $\pm$ 20 %, de préférence de $\pm$ 10 %, notamment de $\pm$ 5 %, et
* la longueur ($Q_{11,3}$) de l'orthodromie (20) entre le troisième point voisin ($P_8$) le plus proche et son point voisin ($P_{13}$) le plus proche par rapport au rayon de la balle (R) étant de 1,71 $\pm$ 20 %, de préférence de $\pm$ 10 %, notamment de $\pm$ 5 %,

- pour le douzième point de marquage ($P_{12}$),

* la longueur ($Q_{12,1}$) de l'orthodromie (20) entre le point voisin ($P_6$) le plus proche et le deuxième point voisin ($P_5$) le plus proche par rapport au rayon de la balle (R) étant de 1,21 $\pm$ 20 %, de préférence de $\pm$ 10 %, notamment de $\pm$ 5 %,
* la longueur ($Q_{12,2}$) de l'orthodromie (20) entre le deuxième point voisin ($P_5$) le plus proche et son troisième point voisin ($P_4$) le plus proche par rapport au rayon de la balle (R) étant de 0,85 $\pm$ 20 %, de préférence de $\pm$ 10 %, notamment de $\pm$ 5 %, et
* la longueur ($Q_{12,3}$) de l'orthodromie (20) entre le troisième point voisin ($P_4$) le plus proche et son point voisin ($P_6$) le plus proche par rapport au rayon de la balle (R) étant de 1,51 $\pm$ 20 %, de préférence de $\pm$ 10 %, notamment de $\pm$ 5 %,

- pour le treizième point de marquage ($P_{13}$),

* la longueur ($Q_{13,1}$) de l'orthodromie (20) entre le point voisin ($P_{10}$) le plus proche et le deuxième point voisin ($P_{11}$) le plus proche par rapport au rayon de la balle (R) étant de 0,88 $\pm$ 20 %, de préférence de $\pm$ 10 %, notamment de $\pm$ 5 %,
* la longueur ($Q_{13,2}$) de l'orthodromie (20) entre le deuxième point voisin ($P_{11}$) le plus proche et son troisième point voisin ($P_1$) le plus proche par rapport au rayon de la balle (R) étant de 1,84 $\pm$ 20 %, de préférence de $\pm$ 10 %, notamment de $\pm$ 5 %, et
* la longueur ($Q_{13,3}$) de l'orthodromie (20) entre le troisième point voisin ($P_1$) le plus proche et son point voisin ($P_{10}$) le plus proche par rapport au rayon de la balle (R) étant de 1,33 $\pm$ 20 %, de préférence de $\pm$ 10 %, notamment de $\pm$ 5 %,

- pour le quatorzième point de marquage ($P_{14}$),

* la longueur ($Q_{14,1}$) de l'orthodromie (20) entre le point voisin ($P_9$) le plus proche et le deuxième point voisin ($P_4$) le plus proche par rapport au rayon de la balle (R) étant de 1,12 $\pm$ 20 %, de préférence de $\pm$ 10 %, notamment de $\pm$ 5 %,
* la longueur ($Q_{14,2}$) de l'orthodromie (20) entre le deuxième point voisin ($P_4$) le plus proche et son troisième point voisin ($P_{11}$) le plus proche par rapport au rayon de la balle (R) étant de 1,88 $\pm$ 20 %, de préférence de $\pm$ 10 %, notamment de $\pm$ 5 %, et

* la longueur ($Q_{14,3}$) de l'orthodromie (20) entre le troisième point voisin ($P_{11}$) le plus proche et son point voisin ($P_9$) le plus proche par rapport au rayon de la balle (R) étant de 1,05 $\pm$ 20 %, de préférence de $\pm$ 10 %, notamment de $\pm$ 5 %,

- pour le quinzième point de marquage ($P_{15}$),

* la longueur ($Q_{15,1}$) de l'orthodromie (20) entre le point voisin ($P_8$) le plus proche et le deuxième point voisin ($P_3$) le plus proche par rapport au rayon de la balle (R) étant de 0,87 $\pm$ 20 %, de préférence de $\pm$ 10 %, notamment de $\pm$ 5 %,
* la longueur ($Q_{15,2}$) de l'orthodromie (20) entre le deuxième point voisin ($P_3$) le plus proche et son troisième point voisin ($P_7$) le plus proche par rapport au rayon de la balle (R) étant de 0,90 $\pm$ 20 %, de préférence de $\pm$ 10 %, notamment de $\pm$ 5 %, et
* la longueur ($Q_{15,3}$) de l'orthodromie (20) entre le troisième point voisin ($P_7$) le plus proche et son point voisin ($P_8$) le plus proche par rapport au rayon de la balle (R) étant de 1,58 $\pm$ 20 %, de préférence de $\pm$ 10 %, notamment de $\pm$ 5 %,

- pour le seizième point de marquage ($P_{16}$),

* la longueur ($Q_{16,1}$) de l'orthodromie (20) entre le point voisin ($P_7$) le plus proche et le deuxième point voisin ($P_{17}$) le plus proche par rapport au rayon de la balle (R) étant de 0,76 $\pm$ 20 %, de préférence de $\pm$ 10 %, notamment de $\pm$ 5 %,
* la longueur ($Q_{16,2}$) de l'orthodromie (20) entre le deuxième point voisin ($P_{17}$) le plus proche et son troisième point voisin ($P_5$) le plus proche par rapport au rayon de la balle (R) étant de 1,57 $\pm$ 20 %, de préférence de $\pm$ 10 %, notamment de $\pm$ 5 %, et
* la longueur ($Q_{16,3}$) de l'orthodromie (20) entre le troisième point voisin ($P_5$) le plus proche et son point voisin ($P_7$) le plus proche par rapport au rayon de la balle (R) étant de 1,67 $\pm$ 20 %, de préférence de $\pm$ 10 %, notamment de $\pm$ 5 %,

- pour le dix-septième point de marquage ($P_{17}$),

* la longueur ($Q_{17,1}$) de l'orthodromie (20) entre le point voisin ($P_{16}$) le plus proche et le deuxième point voisin ($P_{10}$) le plus proche par rapport au rayon de la balle (R) étant de 1,47 $\pm$ 20 %, de préférence de $\pm$ 10 %, notamment de $\pm$ 5 %,
* la longueur ($Q_{17,2}$) de l'orthodromie (20) entre le deuxième point voisin ($P_{10}$) le plus proche et son troisième point voisin ($P_7$) le plus proche par rapport au rayon de la balle (R) étant de 1,21 $\pm$ 20 %, de préférence de $\pm$ 10 %, notamment de $\pm$ 5 %, et
* la longueur ($Q_{17,3}$) de l'orthodromie (20) entre le troisième point voisin ($P_7$) le plus proche et son point voisin ($P_{16}$) le plus proche par rapport au rayon de la balle (R) étant de 0,59 $\pm$ 20 %, de préférence de $\pm$ 10 %, notamment de $\pm$ 5 %,

- pour le dix-huitième point de marquage ($P_{18}$),

* la longueur ($Q_{18,1}$) de l'orthodromie (20) entre le point voisin ($P_6$) le plus proche et le deuxième point voisin ($P_{12}$) le plus proche par rapport au rayon de la balle (R) étant de 0,67 $\pm$ 20 %, de préférence de $\pm$ 10 %, notamment de $\pm$ 5 %, et
* la longueur ($Q_{18,2}$) de l'orthodromie (20) entre le deuxième point voisin ($P_{12}$) le plus proche et son troisième point voisin ($P_9$) le plus proche par rapport au rayon de la balle (R) étant de 1,37 $\pm$ 20 %, de préférence de $\pm$ 10 %, notamment de $\pm$ 5 %, et
* la longueur ($Q_{18,3}$) de l'orthodromie (20) entre le troisième point voisin ($P_9$) le plus proche et son point voisin ($P_6$) le plus proche par rapport au rayon de la balle (R) étant de 1,62 $\pm$ 20 %, de préférence de $\pm$ 10 %, notamment de $\pm$ 5 %.

FIG. 1

FIG. 2

FIG. 3

FIG. 4

FIG. 5

FIG. 6

FIG. 7

**EP 4 121 779 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2020096120 A1
- CN 107543530 A
- KR 102101512 B1
- US 20180353828 A1
- US 7062082 B2
- US 20070084095 A1
- CN 106643662 A
- JP 2016218014 A
- WO 2009039367 A1
- US 20210008417 A1
- DE 102008049595 A1